# EUROPEAN PATENT APPLICATION

(11) **EP 4 761 373 A1**
(43) Date of publication of application: **17.06.2026**
(21) Application number: 24851632.0
(22) Date of filing: 26.07.2024
(51) Int. Cl.: H04W 48/18, H04W 76/15, H04W 76/30

(54) **COMMUNICATION SYSTEM**

(30) Priority: 07.08.2023 JP 2023128710
(71) Applicant: MITSUBISHI ELECTRIC CORPORATION, Chiyoda-ku Tokyo 100-8310 (JP)
(72) Inventor: SHIMODA, Tadahiro, Tokyo 100-8310 (JP); MOCHIZUKI, Mitsuru, Tokyo 100-8310 (JP)
(74) Representative: Mewburn Ellis LLP
(86) International application number: PCT/JP2024/026729
(87) International publication number: WO 2025/033207

(57) **Abstract**

A communication system includes: a plurality of networks each including a radio access network and a core network, in which an anchor network that a communication terminal is connected to is configured to perform, based on information related to communication quality between the communication terminal and a data network, determination of whether addition of a network for the communication terminal to connect to is required and selection of an additional network in a case where the addition of a network for the communication terminal to connect to is required, and the network selected as the additional network by the anchor network is configured to perform registration processing for connection to the communication terminal.

## Description

### Technical Field

The present disclosure relates to a radio communication technology.

### Background

In the 3rd Generation Partnership Project (3GPP) being a standard organization of mobile communication systems, a fifth generation (which may be hereinafter referred to as "5G") radio access system is studied (for example, NPL 2) as a successor to Long Term Evolution (LTE) and Long Term Evolution Advanced (LTE-A) being one of fourth generation radio access systems (see NPL 1). A technology of 5G radio sections is referred to as "New Radio Access Technology" ("New Radio" is abbreviated to "NR"). The NR system has been studied, based on the LTE system and the LTE-A system.

For example, in Europe, requirements for 5G are summarized in an organization named METIS (see NPL 3). The 5G radio access system is required to implement lower power consumption and lower apparatus costs, making its system capacity 1000 times as high as, data transmission rate 100 times as high as, data processing delay one fifth (1/5) of, and number of simultaneously connected communication terminals 100 times as large as those of the LTE system (see NPL 3).

To satisfy these requirements, in 3GPP, standardization of 5G has been studied (see NPLs 4 to 23).

As NR access schemes, orthogonal frequency division multiplexing (OFDM) is used in a downlink direction, and OFDM and discrete Fourier transform-spread-OFDM (DFT-s-OFDM) are used in an uplink direction. As with LTE and LTE-A, the 5G system employs only a packet communication method, without including circuit switching.

In NR, frequencies higher than those in LTE are available in order to enhance the transmission rate and reduce the processing delay.

In NR in which frequencies higher than those in LTE may be used, cell coverage is secured by forming a narrow beam-like transmission and reception range (beamforming) and changing directions of beams (beam sweeping).

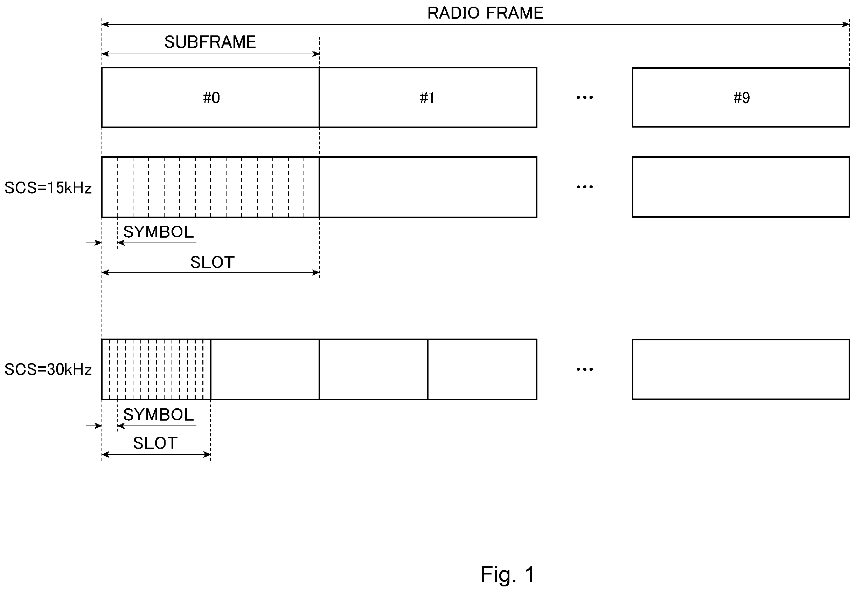

Decisions on a frame configuration in the NR system in 3GPP described in NPL 1 (Section 5) will be described with reference to Fig. 1. Fig. 1 is an explanatory diagram illustrating a configuration of radio frames used in an NR communication system. In Fig. 1, one radio frame has 10 ms. The radio frame is divided into 10 subframes having equal sizes. The frame configuration in NR supports one or a plurality of numerologies, that is, one or a plurality of subcarrier spacings (SCSs). In NR, one subframe includes 1 ms and one slot includes 14 symbols, regardless of the subcarrier spacing. The number of slots included in one subframe is one with the subcarrier spacing of 15 kHz, and the number of slots with other subcarrier spacings increases in proportion to the subcarrier spacing (see NPL 11 (3GPP TS 38.211)).

Decisions on a channel configuration in the NR system in 3GPP are described in NPL 2 (Section 5) and NPL 11.

A physical broadcast channel (PBCH) is a downlink transmission channel from a base station apparatus (which may be hereinafter simply referred to as a "base station") to a communication terminal apparatus (which may be hereinafter referred to as a "communication terminal" or a "terminal") such as a mobile terminal apparatus (which may be hereinafter simply referred to as a "mobile terminal"). The PBCH is transmitted together with a downlink synchronization signal.

The downlink synchronization signal in NR includes a primary synchronization signal (P-SS) and a secondary synchronization signal (S-SS). The synchronization signal is transmitted as a synchronization signal burst (which may be hereinafter referred to as an SS burst) from the base station with predetermined periodicity for predetermined duration. The SS burst includes a synchronization signal block (which may be hereinafter referred to as an SS block) of each beam of the base station.

The base station transmits, by changing the beams, the SS block of each beam within the duration of the SS burst. The SS block includes the P-SS, the S-SS, and the PBCH.

A physical downlink control channel (PDCCH) is a downlink transmission channel from the base station to the communication terminal. The PDCCH carries downlink control information (DCI). The DCI includes resource allocation information of a downlink shared channel (DL-SCH) being one of transport channels to be described later, resource allocation information of a paging channel (PCH) being one of transport channels to be described later, hybrid automatic repeat request (HARQ) information on the DL-SCH, and the like. The DCI may include an uplink scheduling grant. The DCI may include an acknowledgement (Ack)/negative acknowledgement (Nack) being a response signal for uplink transmission. For flexible switching of DL/UL in the slot, the DCI may include a slot format indication (SFI). The PDCCH or the DCI is also referred to as an L1/L2 control signal.

In NR, a time/frequency domain as candidates including the PDCCH is provided. The domain is referred to as a control resource set (CORESET). The communication terminal monitors the CORESET and acquires the PDCCH.

A physical downlink shared channel (PDSCH) is a downlink transmission channel from the base station to the communication terminal. To the PDSCH, a downlink shared channel (DL-SCH) being a transport channel and a PCH being a transport channel are mapped.

A physical uplink control channel (PUCCH) is an uplink transmission channel from the communication terminal to the base station. The PUCCH carries uplink control information (UCI). The UCI includes an Ack/Nack being a response signal for downlink transmission, channel state information (CSI), a scheduling request (SR), and the like. The CSI includes a rank indicator (RI), a precoding matrix indicator (PMI), and a channel quality indicator (CQI) report. The RI is rank information of a channel matrix in Multiple Input Multiple Output (MIMO). The PMI is information of a precoding weight matrix used in MIMO. The CQI is quality information indicating received data quality or communication path quality. The UCI may be carried on a PUSCH to be described later. The PUCCH or the UCI is also referred to as an L1/L2 control signal.

A physical uplink shared channel (PUSCH) is an uplink transmission channel from the communication terminal to the base station. To the PUSCH, an uplink shared channel (UL-SCH) being one of transport channels is mapped.

A physical random access channel (PRACH) is an uplink transmission channel from the communication terminal to the base station. The PRACH carries a random access preamble.

A downlink reference signal (RS) is known symbols in the NR communication system. The following four types of downlink reference signals are defined. They are a data demodulation reference signal (DM-RS) being a UE-specific reference signal, a phase tracking reference signal (PT-RS), a positioning reference signal (PRS), and a channel state information reference signal (CSI-RS). Measurement of a physical layer of the communication terminal includes reference signal received power (RSRP) measurement and reference signal received quality (RSRQ) measurement.

An uplink reference signal is also similarly known symbols in the NR communication system. The following three types of uplink reference signals are defined. They are a data demodulation reference signal (DM-RS), a phase tracking reference signal (PT-RS), and a sounding reference signal (SRS).

Transport channels described in NPL 2 (Section 5) will be described. A broadcast channel (BCH), among downlink transport channels, is broadcast to the entire coverage of the base station (cell). The BCH is mapped to the physical broadcast channel (PBCH).

HARQ retransmission control is applied to the downlink shared channel (DL-SCH). The DL-SCH can be broadcast to the entire coverage of the base station (cell). The DL-SCH supports dynamic or semi-static resource allocation. The semi-static resource allocation is also referred to as semi-persistent scheduling. The DL-SCH supports discontinuous reception (DRX) of the communication terminal in order to implement low power consumption of the communication terminal. The DL-SCH is mapped to the physical downlink shared channel (PDSCH).

The paging channel (PCH) supports DRX of the communication terminal in order to enable low power consumption of the communication terminal. The PCH is required to be broadcast to the entire coverage of the base station (cell). The PCH is mapped to physical resources that can be dynamically used for traffic, such as the physical downlink shared channel (PDSCH).

HARQ retransmission control is applied to the uplink shared channel (UL-SCH) among uplink transport channels. The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of collision. The RACH is mapped to the physical random access channel (PRACH).

HARQ will be described. HARQ is a technology for enhancing communication quality of a transmission path, using a combination of an automatic repeat request (ARQ) and error correction (forward error correction). HARQ has an advantage in that, owing to retransmission, error correction effectively functions even for a transmission path with varying communication quality. Particularly, in retransmission, it is also possible to further enhance quality by combining reception results of first transmission and reception results of retransmission.

An example of a method of retransmission will be described. In a case in which a receiver fails to correctly decode received data, that is, a cyclic redundancy check (CRC) error occurs in the receiver (CRC = NG), a "Nack" is transmitted from the receiver to a transmitter. The transmitter that has received the "Nack" retransmits data. In a case in which the receiver successfully correctly decodes received data, that is, a CRC error does not occur in the receiver (CRC = OK), an "Ack" is transmitted from the receiver to the transmitter. The transmitter that has received the "Ack" transmits subsequent data.

Another example of a method of retransmission will be described. In a case in which a CRC error occurs in the receiver, a retransmission request is performed from the receiver to the transmitter. The retransmission request is performed using toggling of a new data indicator (NDI). The transmitter that has received the retransmission request retransmits data. In a case in which a CRC error does not occur in the receiver, the retransmission request is not performed. In a case in which the transmitter does not receive the retransmission request for a predetermined time, the transmitter considers that no CRC error has occurred in the receiver.

Logical channels described in NPL 1 (Section 6) will be described. A broadcast control channel (BCCH) is a downlink channel for broadcasting system control information. The BCCH being a logical channel is mapped to the broadcast channel (BCH) or the downlink shared channel (DL-SCH) being transport channels.

A paging control channel (PCCH) is a downlink channel for transmitting paging information and system information change. The PCCH being a logical channel is mapped to the paging channel (PCH) being a transport channel.

A common control channel (CCCH) is a channel for transmitting control information between the communication terminal and the base station. The CCCH is used in a case in which the communication terminal does not have RRC connection with the network. In the downlink direction, the CCCH is mapped to the downlink shared channel (DL-SCH) being a transport channel. In the uplink direction, the CCCH is mapped to the uplink shared channel (UL-SCH) being a transport channel.

A dedicated control channel (DCCH) is a channel for transmitting dedicated control information between the communication terminal and the network on a one-to-one basis. The DCCH is used in a case in which the communication terminal has RRC connection with the network. The DCCH is mapped to the uplink shared channel (UL-SCH) in the uplink, and is mapped to the downlink shared channel (DL-SCH) in the downlink.

A dedicated traffic channel (DTCH) is a channel for one-to-one communication to the communication terminal for transmission of user information. The DTCH is present in both of the uplink and the downlink. The DTCH is mapped to the uplink shared channel (UL-SCH) in the uplink, and is mapped to the downlink shared channel (DL-SCH) in the downlink.

Location tracking of the communication terminal is performed in a unit of an area consisting of one or more cells. Location tracking is performed to enable tracking the location of the communication terminal even in an idle state, and enable calling the communication terminal, that is, enable the communication terminal to receive a call. The area for location tracking of the communication terminal is referred to as a tracking area (TA).

NR supports calling the communication terminal in a range in a unit of an area smaller than the tracking area. The range is referred to as a RAN notification area (RNA). Paging of the communication terminal in an RRC_INACTIVE state to be described later is performed in the range.

In NR, carrier aggregation (CA) is studied, in which two or more component carriers (CCs) are aggregated to support wide frequency bandwidths (transmission bandwidths). CA is described in NPL 1.

In a case in which CA is configured, the UE being a communication terminal has a single RRC connection with the network (NW). In RRC connection, one serving cell provides Non-Access Stratum (NAS) mobility information and security input. The cell is referred to as a primary cell (PCell). A secondary cell (SCell) is configured to form a group of serving cells with the PCell, according to a UE capability. The group of serving cells consisting of one PCell and one or more SCells is configured for one UE.

3GPP has dual connectivity (abbreviated to DC) or the like in which the UE connects to two base stations and perform communication, in order to further increase communication capacity. DC is described in NPLs 1 and 22.

One of the base stations performing dual connectivity (DC) may be referred to as a "master base station (master node (MN))", and the other may be referred to as a "secondary base station (secondary node (SN))". The serving cells configured by the master base station may be collectively referred to as a master cell group (MCG), and the serving cells configured by the secondary base station may be collectively referred to as a secondary cell group (SCG). In DC, a primary cell in the MCG or the SCG is referred to as a special cell (SpCell or SPCell). The special cell in the MCG is referred to as a PCell, and the special cell in the SCG is referred to as a primary SCG cell (PSCell).

In NR, the base station configures a part of the carrier frequency band (the part may be hereinafter referred to as a bandwidth part (BWP)) for the UE in advance, and the UE performs transmission and reception to and from the base station in the BWP, to thereby reduce power consumption in the UE.

In 3GPP, support of services (which may be applications) using sidelink (Side Link, SL) communication (also referred to as PC5 communication) both in an Evolved Packet System (EPS) and a 5G core system to be described later is studied (see NPLs 1, 2, and 26 to 28). In SL communication, communication is performed between the terminals. Examples of the services using SL communication include a vehicle-to-everything (V2X) service, a proximitybased service, and the like. The SL communication proposes not only direct communication between the terminals but also communication between the UE and the NW via relay (see NPLs 26 and 28).

Physical channels used in the SL (see NPLs 2 and 11) will be described. A physical sidelink broadcast channel (PSBCH) carries information on a system and synchronization, and is transmitted from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

A physical sidelink feedback channel (PSFCH) carries sidelink HARQ feedback from the UE that has received PSSCH transmission to the UE that has transmitted the PSSCH.

Transport channels used in the SL (see NPL 1) will be described. A sidelink broadcast channel (SL-BCH) has a predetermined transport format, and is mapped to the PSBCH being a physical channel.

A sidelink shared channel (SL-SCH) supports broadcast transmission. The SL-SCH supports both of UE autonomous resource selection and resource allocation scheduled by the base station. UE autonomous resource selection has a risk of collision, and in a case in which dedicated resources are allocated to the UE by the base station, there is no collision. The SL-SCH supports dynamic link adaptation by changing transmission power, modulation, and coding. The SL-SCH is mapped to the PSSCH being a physical channel.

Logical channels used in the SL (see NPL 2) will be described. A sidelink broadcast control channel (SBCCH) is a sidelink channel for broadcasting sidelink system information from one UE to another UE. The SBCCH is mapped to the SL-BCH being a transport channel.

A sidelink traffic channel (STCH) is a one-to-many sidelink traffic channel for transmitting user information from one UE to another UE. The STCH is used only by the UE having a sidelink communication capability and the UE having a V2X sidelink communication capability. One-to-one communication between the UEs having two sidelink communication capabilities is also implemented on the STCH. The STCH is mapped to the SL-SCH being a transport channel.

A sidelink control channel (SCCH) is a sidelink control channel for transmitting control information from one UE to another UE. The SCCH is mapped to the SL-SCH being a transport channel.

In LTE, only broadcast is supported in the SL communication. In NR, support of unicast and groupcast in addition to broadcast in the SL communication is studied (see NPL 27 (3GPP TS 23.287)).

In SL unicast communication and groupcast communication, HARQ feedback (Ack/Nack), a CSI report, and the like are supported.

In 3GPP, an integrated access and backhaul (IAB) is studied, in which both of an access link being a link between the UE and the base station and a backhaul link being a link between the base stations are performed wirelessly (see NPLs 2, 20, and 29).

Some new technologies are proposed for mobile communication systems. For example, in order to enhance communication capacity and reliability, a technology is proposed that one terminal connects to a plurality of NWs simultaneously and that causes communication capacity and reliability to be enhanced (see NPLs 30 and 31).

### Citation List

### Non Patent Literature

[NPL 1] 3GPP TS 36.300 V17.3.0
[NPL 2] 3GPP TS 38.300 V17.3.0
[NPL 3] "Scenarios, requirements and KPIs for 5G mobile and wireless system", ICT-317669-METIS/D1.1
[NPL 4] 3GPP TR 23.799 V14.0.0
[NPL 5] 3GPP TR 38.801 V14.0.0
[NPL 6] 3GPP TR 38.802 V14.2.0
[NPL 7] 3GPP TR 38.804 V14.0.0
[NPL 8] 3GPP TR 38.912 V16.0.0
[NPL 9] 3GPP RP-172115
[NPL 10] 3GPP TS 23.501 V18.0.0
[NPL 11] 3GPP TS 38.211 V17.4.0
[NPL 12] 3GPP TS 38.212 V17.4.0
[NPL 13] 3GPP TS 38.213 V17.4.0
[NPL 14] 3GPP TS 38.214 V17.4.0
[NPL 15] 3GPP TS 38.321 V17.3.0
[NPL 16] 3GPP TS 38.322 V17.2.0
[NPL 17] 3GPP TS 38.323 V17.3.0
[NPL 18] 3GPP TS 37.324 V17.0.0
[NPL 19] 3GPP TS 38.331 V17.3.0
[NPL 20] 3GPP TS 38.401 V17.3.0
[NPL 21] 3GPP TS 38.413 V17.3.0
[NPL 22] 3GPP TS 37.340 V17.3.0
[NPL 23] 3GPP TS 38.423 V17.3.0
[NPL 24] 3GPP TS 38.305 V17.3.0
[NPL 25] 3GPP TS 23.273 V18.0.0
[NPL 26] 3GPP TR 23.703 V12.0.0
[NPL 27] 3GPP TS 23.287 V17.5.0
[NPL 28] 3GPP TS 23.303 V17.0.0
[NPL 29] 3GPP TS 38.340 V17.3.0
[NPL 30] 3GPP SWS-230049
[NPL 31] 3GPP TS 23.502 V18.2.0

### SUMMARY

### Technical Problem

In a mobile communication system, a UE may connect to a plurality of networks. In connection of a UE to a plurality of networks, addition of a network to be connected to the UE may be performed. However, the above-described NPLs do not disclose concrete processing for such network addition. This causes issues such as connection to a plurality of networks fails to be established, preventing enhancement of communication capacity and reliability from being achieved.

In view of such issues, the present disclosure has an object that a network to be connected to the UE is added to achieve enhancement of communication capacity and reliability in communication networks.

### Solution to Problem

A communication system according to the present disclosure is a communication system supporting a fifth generation radio access system, the communication system including: a plurality of networks each including a radio access network and a core network. An anchor network, of the plurality of networks, that a communication terminal is connected to and that has a user plane function of directly connecting to a data network being a data transmission and reception destination for the communication terminal is configured to perform, based on information related to communication quality between the communication terminal and the data network, determination of whether addition of a network for the communication terminal to connect to is required and selection of an additional network in a case where the addition of a network for the communication terminal to connect to is required. The network selected as the additional network by the anchor network is configured to perform registration processing for connection to the communication terminal.

### Advantageous Effects of Invention

According to the present disclosure, a communication system is provided that a network to be connected to the UE is added to allow enhancement of communication capacity and reliability in communication networks to be achieved.

The objects, features, aspects and advantages of the present disclosure will become more apparent from the following detailed description and the accompanying drawings.

### BRIEF DESCRIPTION OF THE DRAWINGS

Fig. 1 is an explanatory diagram illustrating a configuration of radio frames used in an NR communication system;
Fig. 2 is a block diagram illustrating an overall configuration of an NR communication system 210 discussed in 3GPP;
Fig. 3 is a configuration diagram of DC performed by base stations to connect to an NG core;
Fig. 4 is a block diagram illustrating a configuration of a mobile terminal 202 illustrated in Fig. 2;
Fig. 5 is a block diagram illustrating a configuration of a base station 213 illustrated in Fig. 2;
Fig. 6 is a block diagram illustrating a configuration of a 5GC unit;
Fig. 7 is a flowchart illustrating an outline from cell search to idle operation performed by a communication terminal (UE) in an NR communication system;
Fig. 8 is a diagram illustrating an example of a configuration of a cell in an NR system;
Fig. 9 is a connection configuration diagram illustrating an example of a connection configuration of terminals in SL communication;
Fig. 10 is a connection configuration diagram illustrating an example of a connection configuration of base stations supporting an integrated access and backhaul;
Fig. 11 is a sequence diagram illustrating an example of operation up to determination, by an SMF, of addition of an NW to be connected to a UE, according to Embodiment 1;
Fig. 12 is a sequence diagram illustrating another example of the operation up to determination, by the SMF, of addition of an NW to be connected to the UE, according to Embodiment 1;
Fig. 13 is a sequence diagram illustrating another example of the operation up to determination, by the SMF, of addition of an NW to be connected to the UE, according to Embodiment 1;
Fig. 14 is a diagram of the first half of a sequence illustrating an example of registration processing between the UE and an NW to be added and PDU session establishment processing, according to Embodiment 1;
Fig. 15 is a diagram of the second half of the sequence illustrating the example of registration processing between the UE and the NW to be added and PDU session establishment processing, according to Embodiment 1;
Fig. 16 is a diagram of the first half of a sequence illustrating an example of operation of releasing an NW connected to a UE, according to Embodiment 2;
Fig. 17 is a diagram of the second half of the sequence illustrating the example of operation of releasing the NW connected to the UE, according to Embodiment 2;
Fig. 18 is a sequence diagram illustrating another example of the operation of releasing the NW connected to the UE, according to Embodiment 2;
Fig. 19 is a sequence diagram illustrating another example of the operation of releasing the NW connected to the UE, according to Embodiment 2;
Fig. 20 is a diagram of the first half of a sequence illustrating another example of the operation of releasing the NW connected to the UE, according to Embodiment 2;
Fig. 21 is a diagram of the second half of the sequence illustrating such another example of the operation of releasing the NW connected to the UE, according to Embodiment 2;
Fig. 22 is a diagram illustrating an example of a network configuration with a plurality of anchor UPFs, according to Embodiment 4; and
Fig. 23 is a diagram illustrating another example of the network configuration with a plurality of anchor UPFs, according to Embodiment 4.

### DETAILED DESCRIPTION

### First Embodiment

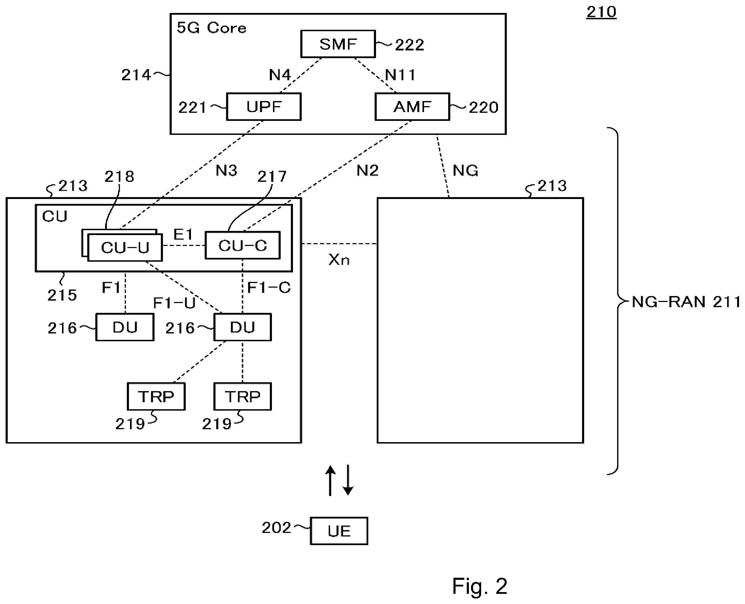

Fig. 2 is a block diagram illustrating an overall configuration of an NR communication system 210 discussed in 3GPP. Fig. 2 will be described. A radio access network is referred to as a next generation radio access network (NG-RAN) 211. A mobile terminal apparatus (hereinafter referred to as a "mobile terminal (user equipment (UE))") 202 being a communication terminal apparatus is capable of radio communication with a base station apparatus (hereinafter referred to as an "NR base station (NG-RAN Node B (gNB))") 213, and transmits and receives signals in radio communication. The NG-RAN 211 includes one or a plurality of NR base stations 213.

Here, the "communication terminal apparatus" includes not only the mobile terminal apparatus such as a mobile cellular phone terminal apparatus, but also includes an immobile device such as a sensor. In the following description, the "communication terminal apparatus" may be simply referred to as a "communication terminal".

A protocol of Access Stratum (AS) is terminated between the UE 202 and the NG-RAN 211. As the protocol of AS, for example, Radio Resource Control (RRC), Service Data Adaptation Protocol (SDAP), Packet Data Convergence Protocol (PDCP), Radio Link Control (RLC), Medium Access Control (MAC), and Physical layer (PHY) are used. The RRC is used in a control plane (which may be hereinafter also referred to as a C plane, a C-Plane, or a CP), the SDAP is used in a user plane (which may be hereinafter also referred to as a U plane, a U-Plane, or a UP), and the PDCP, the MAC, the RLC, and the PHY are used in both of the C plane and the U plane.

The control protocol Radio Resource Control (RRC) between the UE 202 and the NR base station 213 performs broadcast, paging, RRC connection management, and the like. States between the NR base station 213 and the UE 202 in RRC include RRC_IDLE, RRC_CONNECTED, and RRC_INACTIVE.

In RRC_IDLE, public land mobile network (PLMN) selection, system information (SI) broadcast, paging, cell re-selection, mobility, and the like are performed. In RRC_CONNECTED, the mobile terminal has RRC connection, and can transmit and receive data to and from a network. In RRC_CONNECTED, handover (HO), neighbor cell measurement, and the like are performed. In RRC_INACTIVE, connection between a 5G core unit 214 and the NR base station 213 is maintained, and system information (SI) broadcast, paging, cell re-selection, mobility, and the like are performed.

The gNB 213 is connected to the 5G core unit (which may be hereinafter referred to as a "5GC unit") 214 including an Access and Mobility Management Function (AMF), a Session Management Function (SMF), a User Plane Function (UPF), and the like via an NG interface. Control information and/or user data is communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected via an Xn interface, and control information and/or user data is communicated between the gNBs 213.

The 5GC unit 214 is an upper apparatus, or specifically an upper node, and performs control of connection between the NR base station 213 and the mobile terminal (UE) 202, distribution of paging signals to one or a plurality of NR base stations (gNBs) 213 and/or LTE base stations (E-UTRAN Node Bs (eNBs)), and the like. The 5GC unit 214 performs mobility control of an idle state. In a case in which the mobile terminal 202 is in an idle state, an inactive state, and an active state, the 5GC unit 214 manages a tracking area list. The 5GC unit 214 transmits a paging message to a cell belonging to a tracking area in which the mobile terminal 202 is registered, and thereby starts a paging protocol.

The gNB 213 may configure one or a plurality of cells. In a case in which one gNB 213 configures a plurality of cells, each cell is configured to be capable of communicating with the UE 202.

The gNB 213 may be divided into a central unit (which may be hereinafter referred to as a CU) 215 and a distributed unit (which may be hereinafter referred to as a DU) 216. One CU 215 is configured in the gNB 213. One or a plurality of DUs 216 are configured in the gNB 213. One DU 216 configures one or a plurality of cells. The CU 215 is connected to the DU 216 via an F1 interface, and control information and/or user data is communicated between the CU 215 and the DU 216. The F1 interface includes an F1-C interface and an F1-U interface. The CU 215 has a function of each protocol of the RRC, the SDAP, and the PDCP, and the DU 216 has a function of each protocol of the RLC, the MAC, and the PHY. One or a plurality of transmission reception points (TRPs) 219 may be connected to the DU 216. The TRP 219 transmits and receives radio signals to and from the UE.

The CU 215 may be divided into a C-plane CU (CU-C) 217 and a U-plane CU (CU-U) 218. One CU-C 217 is configured in the CU 215. One or a plurality of CU-Us 218 are configured in the CU 215. The CU-C 217 is connected to the CU-U 218 via an E1 interface, and control information is communicated between the CU-C 217 and the CU-U 218. The CU-C 217 is connected to the DU 216 via an F1-C interface, and control information is communicated between the CU-C 217 and the DU 216. The CU-U 218 is connected to the DU 216 via an F1-U interface, and user data is communicated between the CU-U 218 and the DU 216.

In the 5G communication system, a Unified Data Management (UDM) function and a Policy Control Function (PCF) described in NPL 10 (3GPP TS 23.501) may be included. The UDM and/or the PCF may be included in the 5GC unit 214 of Fig. 2.

In the 5G communication system, a Location Management Function (LMF) described in NPL 24 (3GPP TS 38.305) may be provided. As disclosed in NPL 25 (3GPP TS 23.273), the LMF may be connected to the base station via the AMF.

In the 5G communication system, a Non-3GPP Interworking Function (N3IWF) described in NPL 10 (3GPP TS 23.501) may be included. The N3IWF may terminate an access network (AN) between the N3IWF and the UE in non-3GPP access with the UE.

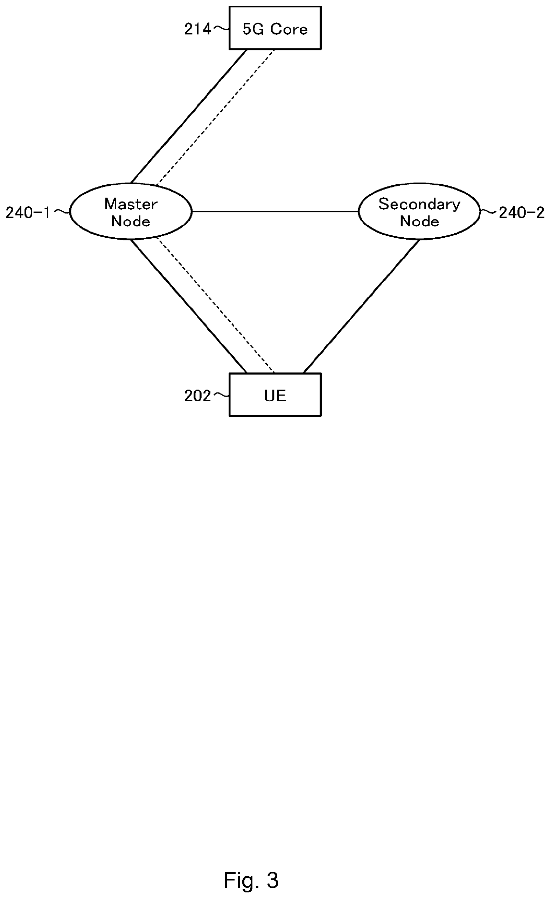

Fig. 3 is a diagram illustrating a configuration of dual connectivity (DC) to connect to an NG core. In Fig. 3, the solid line indicates connection of the U-Plane, and the broken line indicates connection of the C-Plane. In Fig. 3, a master base station 240-1 may be a gNB or an eNB. A secondary base station 240-2 may be a gNB or an eNB. For example, in Fig. 3, a DC configuration in which the master base station 240-1 is a gNB and the secondary base station 240-2 is an eNB may be referred to as NG-EN-DC. Although Fig. 3 illustrates an example in which U-Plane connection between the 5GC unit 214 and the secondary base station 240-2 is performed via the master base station 240-1, the U-Plane connection may be directly performed between the 5GC unit 214 and the secondary base station 240-2. In Fig. 3, in place of the 5GC unit 214, an Evolved Packet Core (EPC), which is a core network connected to the LTE system or the LTE-A system, may be connected to the master base station 240-1. U-Plane connection between the EPC and the secondary base station 240-2 may be directly performed.

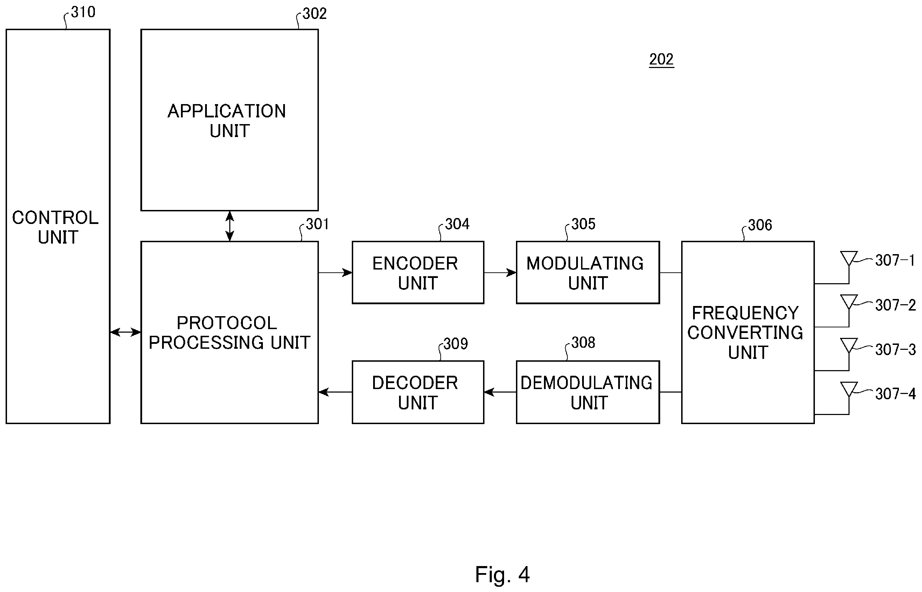

Fig. 4 is a block diagram illustrating a configuration of the mobile terminal 202 illustrated in Fig. 2. Transmission processing of the mobile terminal 202 illustrated in Fig. 4 will be described. First, control data from a control unit 310 and user data from an application unit 302 are transmitted to a protocol processing unit 301. The control data and the user data may be buffered. The buffers of the control data and the user data may be provided in the control unit 310, may be provided in the application unit 302, or may be provided in the protocol processing unit 301. The protocol processing unit 301 performs protocol processing of the SDAP, the PDCP, the RLC, the MAC, and the like, for example, operation such as determination of a transmission destination base station in DC or the like and provision of a header in each protocol. The data subjected to the protocol processing is delivered to an encoder unit 304, and is subjected to encoding processing such as error correction. There may be data that is directly output from the protocol processing unit 301 to a modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to a frequency converting unit 306 to be converted into a radio transmission frequency. Subsequently, transmission signals are transmitted from antennas 307-1 to 307-4 to the base station 213. Although Fig. 4 illustrates an example of a case in which the number of antennas is four, the number of antennas is not limited to four.

Reception processing of the mobile terminal 202 is performed as follows. A radio signal from the base station 213 is received by the antennas 307-1 to 307-4. The received signal is converted from a radio reception frequency into a baseband signal in the frequency converting unit 306, and is subjected to demodulation processing in a demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, the PDCP, the SDAP, and the like, for example, operation such as removal of a header in each protocol. Of the data subjected to the protocol processing, the control data is delivered to the control unit 310 and the user data is delivered to the application unit 302.

The series of processing of the mobile terminal 202 is controlled by the control unit 310. Thus, the control unit 310 is also connected to each of the units 302 and 304 to 309, of which illustration is omitted in Fig. 4.

Each unit of the mobile terminal 202, such as the control unit 310, the protocol processing unit 301, the encoder unit 304, and the decoder unit 309, is implemented by processing circuitry including a processor and a memory, for example. For example, the control unit 310 is implemented by the processor executing a program describing the series of processing of the mobile terminal 202. The program describing the series of processing of the mobile terminal 202 is stored in the memory. Examples of the memory include non-volatile or volatile semiconductor memories, such as a random access memory (RAM), a read only memory (ROM), and a flash memory. Each unit of the mobile terminal 202, such as the control unit 310, the protocol processing unit 301, the encoder unit 304, and the decoder unit 309, may be implemented by dedicated processing circuitry such as a field programmable gate array (FPGA), an application specific integrated circuit (ASIC), and a digital signal processor (DSP). In Fig. 4, the number of antennas used by the mobile terminal 202 for transmission and the number of antennas used thereby for reception may be the same or different.

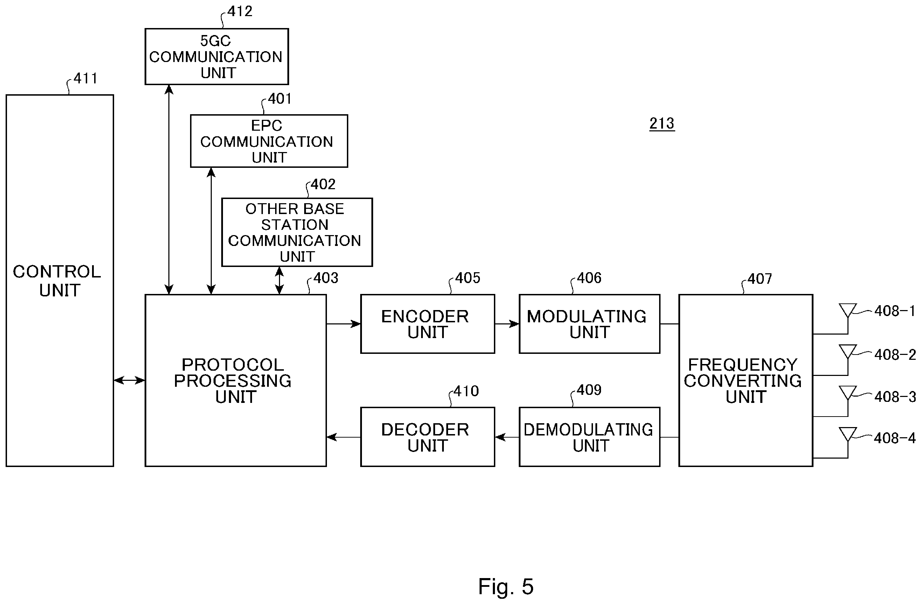

Fig. 5 is a block diagram illustrating a configuration of the base station 213 illustrated in Fig. 2. Transmission processing of the base station 213 illustrated in Fig. 5 will be described. An EPC communication unit 401 transmits and receives data between the base station 213 and the EPC. A 5GC communication unit 412 transmits and receives data between the base station 213 and the 5GC (such as the 5GC unit 214). Another base station communication unit 402 transmits and receives data to and from another base station. Each of the EPC communication unit 401, the 5GC communication unit 412, and such another base station communication unit 402 exchanges information with a protocol processing unit 403. Control data from a control unit 411 and user data and control data from the EPC communication unit 401, the 5GC communication unit 412, and such another base station communication unit 402 are transmitted to the protocol processing unit 403. The control data and the user data may be buffered. The buffers of the control data and the user data may be provided in the control unit 411, may be provided in the EPC communication unit 401, may be provided in the 5GC communication unit 412, or may be provided in such another base station communication unit 402.

The protocol processing unit 403 performs protocol processing of the SDAP, the PDCP, the RLC, the MAC, and the like, for example, operation such as routing of transmission data in DC or the like and provision of a header in each protocol. The data subjected to the protocol processing is delivered to an encoder unit 405, and is subjected to encoding processing such as error correction. There may be data that is directly output from the protocol processing unit 403 to a modulating unit 406 without being subjected to the encoding processing. The data may be transmitted from the protocol processing unit 403 to such another base station communication unit 402. For example, in DC, the data transmitted from the 5GC communication unit 412 or the EPC communication unit 401 may be transmitted to another base station, such as the secondary base station, via such another base station communication unit 402. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted from antennas 408-1 to 408-4 to one or a plurality of mobile terminals 202. Although Fig. 5 illustrates an example of a case in which the number of antennas is four, the number of antennas is not limited to four.

Reception processing of the base station 213 is performed as follows. A radio signal from one or a plurality of mobile terminals 202 is received by the antennas 408-1 to 408-4. The received signal is converted from a radio reception frequency into a baseband signal in the frequency converting unit 407, and is subjected to demodulation processing in a demodulating unit 409. The demodulated data is delivered to a decoder unit 410, and is subjected to decoding processing such as error correction. The decoded data is delivered to the protocol processing unit 403, and is subjected to protocol processing of the MAC, the RLC, the PDCP, the SDAP, and the like, for example, operation such as removal of a header in each protocol. Of the data subjected to the protocol processing, the control data is delivered to the control unit 411, the 5GC communication unit 412, the EPC communication unit 401, or such another base station communication unit 402, and the user data is delivered to the 5GC communication unit 412, the EPC communication unit 401, or such another base station communication unit 402. The data transmitted from such another base station communication unit 402 may be transmitted to the 5GC communication unit 412 or the EPC communication unit 401. The data may be uplink data transmitted to the 5GC communication unit 412 or the EPC communication unit 401 unit via another base station in DC, for example.

The series of processing of the base station 213 is controlled by the control unit 411. Thus, the control unit 411 is also connected to each of the units 401, 402, 405 to 410, and 412, of which illustration is omitted in Fig. 5.

Each unit of the base station 213, such as the control unit 411, the protocol processing unit 403, the 5GC communication unit 412, the EPC communication unit 401, such another base station communication unit 402, the encoder unit 405, and the decoder unit 410, is implemented by processing circuitry including a processor and a memory or dedicated processing circuitry such as an FPGA, an ASIC, and a DSP, as in the case of the mobile terminal 202 described above. In Fig. 5, the number of antennas used by the base station 213 for transmission and the number of antennas used thereby for reception may be the same or different.

As an example of a configuration of the CU 215 illustrated in Fig. 2, a configuration provided with a DU communication unit may be used, except the encoder unit 405, the modulating unit 406, the frequency converting unit 407, the antennas 408-1 to 408-4, the demodulating unit 409, and the decoder unit 410 illustrated in Fig. 5. The DU communication unit is connected to the protocol processing unit 403. The protocol processing unit 403 in the CU 215 performs protocol processing of the PDCP, the SDAP, and the like.

As an example of a configuration of the DU 216 illustrated in Fig. 2, a configuration provided with a CU communication unit may be used, except the EPC communication unit 401, such another base station communication unit 402, and the 5GC communication unit 412 illustrated in Fig. 5. The CU communication unit is connected to the protocol processing unit 403. The protocol processing unit 403 in the DU 216 performs protocol processing of the PHY, the MAC, the RLC, and the like.

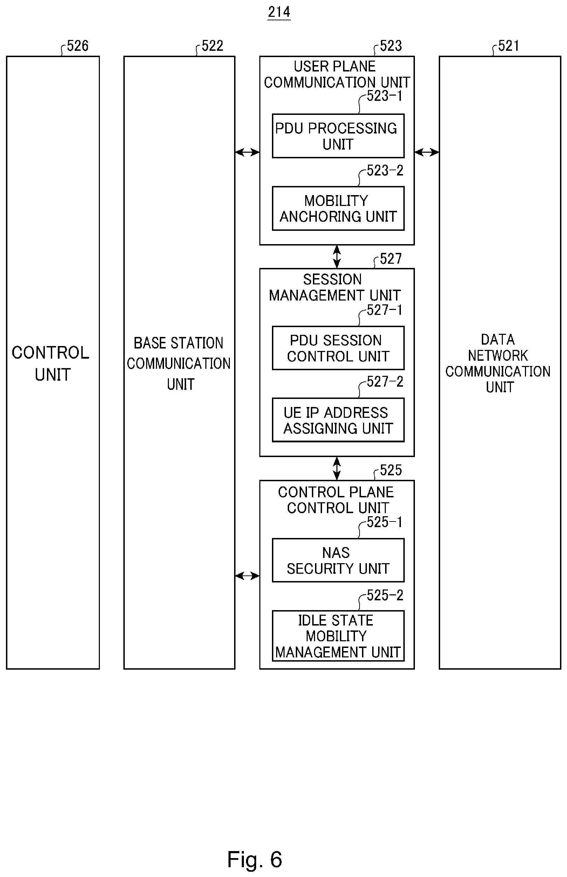

Fig. 6 is a block diagram illustrating a configuration of the 5GC unit. Fig. 6 illustrates a configuration of the 5GC unit 214 illustrated in Fig. 2 described above. Fig. 6 illustrates a case in which a configuration of the AMF, a configuration of the SMF, and a configuration of the UPF are included in the 5GC unit 214 illustrated in Fig. 2. In the example illustrated in Fig. 6, the AMF may have a function of a control plane control unit 525, the SMF may have a function of a session management unit 527, and the UPF may have a function of a user plane communication unit 523 and a data network communication unit 521. The data network communication unit 521 transmits and receives data between the 5GC unit 214 and a data network. The base station communication unit 522 transmits and receives data between the 5GC unit 214 and the base station 213 via an NG interface. User data transmitted from the data network is delivered from the data network communication unit 521 to the base station communication unit 522 via the user plane communication unit 523, and is transmitted to one or a plurality of base stations 213. User data transmitted from the base station 213 is delivered from the base station communication unit 522 to the data network communication unit 521 via the user plane communication unit 523, and is transmitted to the data network.

Control data transmitted from the base station 213 is delivered from the base station communication unit 522 to the control plane control unit 525. The control plane control unit 525 may deliver the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane communication unit 523 includes a PDU processing unit 523-1, a mobility anchoring unit 523-2, and the like, and performs general processing on the user plane (which may be hereinafter also referred to as a U-Plane). The PDU processing unit 523-1 performs processing of data packets, for example, transmission and reception of packets to and from the data network communication unit 521 and transmission and reception of packets to and from the base station communication unit 522. The mobility anchoring unit 523-2 anchors a data path at the time of mobility of the UE.

The session management unit 527 performs management of a PDU session provided between the UE and the UPF and the like. The session management unit 527 includes a PDU session control unit 527-1, a UE IP address assigning unit 527-2, and the like. The PDU session control unit 527-1 performs management of a PDU session between the mobile terminal 202 and the 5GC unit 214. The UE IP address assigning unit 527-2 performs assignment of an IP address to the mobile terminal 202 and the like.

The control plane control unit 525 includes a NAS security unit 525-1, an idle state mobility management unit 525-2, and the like, and performs general processing on the control plane (which may be hereinafter also referred to as a C-Plane). The NAS security unit 525-1 performs security of a Non-Access Stratum (NAS) message and the like. The idle state mobility management unit 525-2 performs mobility management of the idle state (which may also be simply referred to as an "RRC_IDLE state" or "idle"), generation and control of a paging signal in the idle state, addition, deletion, update, search, and tracking area list management of a tracking area of one or a plurality of served mobile terminals 202, and the like.

The series of processing of the 5GC unit 214 is controlled by a control unit 526. Thus, the control unit 526 is connected to each of the units 521 to 523, 525, and 527, of which illustration is omitted in Fig. 6. Each unit of the 5GC unit 214 is implemented by processing circuitry including a processor and a memory or dedicated processing circuitry such as an FPGA, an ASIC, and a DSP, for example, as in the case of the control unit 310 of the mobile terminal 202 described above.

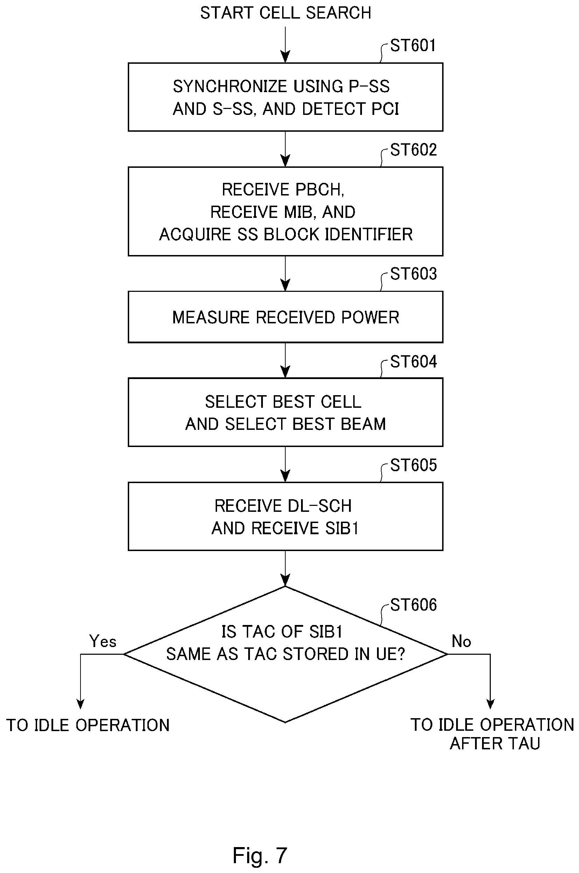

Next, an example of a cell search method in the communication system will be described. Fig. 7 is a flowchart illustrating an outline from cell search to idle operation performed by the communication terminal (UE) in the NR communication system. After the communication terminal starts cell search, in Step ST601, the communication terminal establishes synchronization of a slot timing and a frame timing, using a primary synchronization signal (P-SS) and a secondary synchronization signal (S-SS) transmitted from a neighbor base station.

The P-SS and the S-SS are collectively referred to as a synchronization signal (SS). The synchronization signal (SS) is assigned a synchronization code that corresponds to a physical cell identifier (PCI) assigned to each cell on a one-to-one basis. It is studied that the number of PCIs is 1008. The communication terminal establishes synchronization using the 1008 PCIs, and detects (identifies) the PCI(s) of synchronized cell(s).

Next, in Step ST602, the communication terminal receives a PBCH of the synchronized cell. A master information block (MIB) including cell configuration information is mapped to a BCCH on the PBCH. Thus, by receiving the PBCH and obtaining the BCCH, the MIB can be obtained. Examples of information of the MIB include a system frame number (SFN), scheduling information of a system information block (SIB) 1, subcarrier spacing for the SIB1 or the like, information of a DM-RS position, and the like.

The communication terminal acquires an SS block identifier on the PBCH. A part of a bit string of the SS block identifier is included in the MIB. The rest of the bit string is included in an identifier used to generate a DM-RS sequence accompanying the PBCH. The communication terminal acquires the SS block identifier, using the MIB included in the PBCH and the DM-RS sequence accompanying the PBCH.

Next, in Step ST603, the communication terminal measures received power of an SS block.

Next, in Step ST604, the communication terminal selects a cell having the best received quality, for example, a cell having the highest received power, that is, the best cell, out of the one or more cells detected up to Step ST603. The communication terminal selects a beam having the best received quality, for example, a beam having the highest received power of the SS block, that is, the best beam. In selection of the best beam, for example, received power of the SS block of each SS block identifier is used.

Next, in Step ST605, the communication terminal receives a DL-SCH based on the scheduling information of the SIB1 included in the MIB, and obtains the SIB1 in the broadcast information BCCH. The SIB1 includes information on access to the cell, cell configuration information, and scheduling information of another SIB (SIBk: k is an integer satisfying k ≥ 2). The SIB1 includes a tracking area code (TAC).

Next, in Step ST606, the communication terminal compares the TAC of the SIB 1 received in Step ST605 and a TAC part of a tracking area identity (TAI) in a tracking area list already stored in the communication terminal. The tracking area list is also referred to as a TAI list. The TAI is identification information for identifying the tracking area, and includes a mobile country code (MCC), a mobile network code (MNC), and a tracking area code (TAC). The MCC is a country code. The MNC is a network code. The TAC is a code number of a tracking area.

As a result of the comparison in Step ST606, if the TAC received in Step ST605 is the same as the TAC included in the tracking area list, the communication terminal starts idle operation in the cell. As a result of the comparison, if the TAC received in Step ST605 is not included in the tracking area list, the communication terminal requests, via the cell, the core network (EPC) including an MME and the like to change the tracking area in order to perform tracking area update (TAU).

An apparatus configuring the core network (which may be hereinafter referred to as a "core network apparatus") updates the tracking area list, based on an identification number (a UE-ID or the like) of the communication terminal transmitted from the communication terminal together with a TAU request signal. The core network apparatus transmits the updated tracking area list to the communication terminal. The communication terminal rewrites (updates) a TAC list stored in the communication terminal, based on the received tracking area list. Subsequently, the communication terminal starts idle operation in the cell.

Next, an example of a random access method in the communication system will be described. In random access, 4-step random access and 2-step random access are used. In each of the 4-step random access and the 2-step random access, there are contention-based random access, that is, random access which may cause contention of timings with other mobile terminals, and contention-free random access.

An example of a contention-based 4-step random access method will be described. As a first step, the mobile terminal transmits a random access preamble to the base station. The random access preamble may be selected by the mobile terminal from a predetermined range, or may be individually assigned to the mobile terminal and notified from the base station.

As a second step, the base station transmits a random access response to the mobile terminal. The random access response includes uplink scheduling information to be used in a third step, a terminal identifier to be used in uplink transmission in the third step, and the like.

As the third step, the mobile terminal performs uplink transmission to the base station. The mobile terminal uses the information acquired in the second step in the uplink transmission. As a fourth step, the base station notifies the mobile terminal as to whether contention resolution is achieved. The mobile terminal notified of "without contention" ends random access processing. The mobile terminal notified of "with contention" resumes processing from the first step.

A contention-free 4-step random access method is different from the contention-based 4-step random access method in the following. In other words, prior to the first step, the base station assigns a random access preamble and uplink scheduling to the mobile terminal in advance. A notification as to whether contention resolution is achieved in the fourth step is unnecessary.

An example of a contention-based 2-step random access method will be described. As a first step, the mobile terminal performs transmission of a random access preamble and uplink transmission to the base station. As a second step, the base station notifies the mobile terminal as to whether there is contention. The mobile terminal notified of "without contention" ends random access processing. The mobile terminal notified of "with contention" resumes processing from the first step.

A contention-free 2-step random access method is different from the contention-based 2-step random access method in the following. In other words, prior to the first step, the base station assigns a random access preamble and uplink scheduling to the mobile terminal in advance. As a second step, the base station transmits a random access response to the mobile terminal.

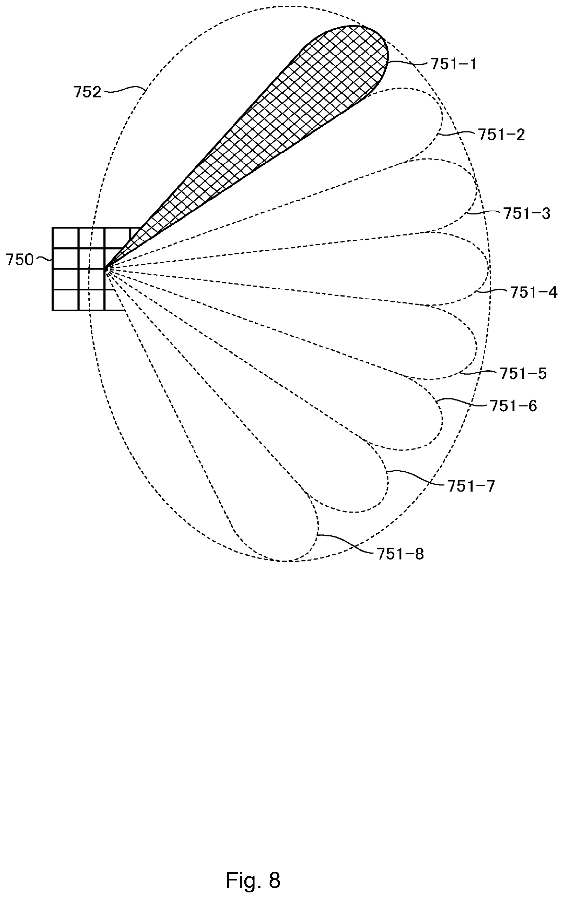

Fig. 8 illustrates an example of a configuration of a cell in NR. In a cell in NR, a narrow beam is formed and is transmitted with its direction being changed. In the example illustrated in Fig. 8, a base station 750 performs transmission and reception to and from the mobile terminal, using a beam 751-1 at a certain time. At another time, the base station 750 performs transmission and reception to and from the mobile terminal, using a beam 751-2. Subsequently, similarly, the base station 750 performs transmission and reception to and from the mobile terminal, using one or a plurality of beams 751-3 to 751-8. In this manner, the base station 750 configures a cell 752 having a wide range.

Although Fig. 8 illustrates an example in which the number of beams used by the base station 750 is eight, the number of beams may be different from eight. In the example illustrated in Fig. 8, although the number of beams simultaneously used by the base station 750 is one, the number of beams may be more than one.

A concept of quasi-colocation (QCL) is used in identification of a beam (see NPL 14 (3GPP TS 38.214)). In other words, identification is performed using information indicating as which beam of a reference signal (for example, an SS block, a CSI-RS) the beam can be considered to be the same. The information may include types of information regarding aspects in which the beam can be considered to be the same beam, for example, information on a Doppler shift, a Doppler shift spread, an average delay, an average delay spread, and a spatial Rx parameter (see NPL 14 (3GPP TS 38.214)).

In 3GPP, a sidelink (SL) is supported for device-to-device (D2D) communication and vehicle-to-vehicle (V2V) communication (see NPL 1 and NPL 16). The SL is defined by a PC5 interface.

In SL communication, support of PC5-S signaling is studied in order to support unicast and groupcast in addition to broadcast (see NPL 27 (3GPP TS 23.287)). For example, the PC5-S signaling is performed to establish the SL, that is, a link for performing PC5 communication. The link is performed in a V2X layer, and is also referred to as a layer 2 link.

In the SL communication, support of RRC signaling is studied (see NPL 27 (3GPP TS 23.287)). The RRC signaling in the SL communication is also referred to as PC5 RRC signaling. For example, notification of a UE capability and notification of an AS layer configuration and the like for performing V2X communication using the PC5 communication between the UEs performing the PC5 communication are proposed.

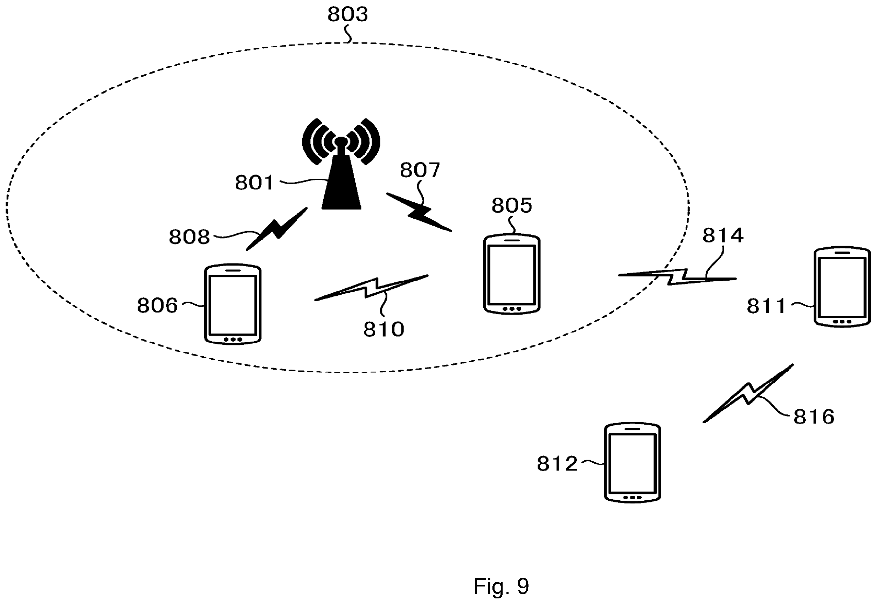

An example of a connection configuration of the mobile terminals in the SL communication is illustrated in Fig. 9. In the example illustrated in Fig. 9, a UE 805 and a UE 806 are present inside coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. SL communication 816 is performed between the UE 811 and the UE 812.

As an example of communication between the UE and the NW via relay in the SL communication, the UE 805 illustrated in Fig. 9 relays communication between the UE 811 and the base station 801.

A configuration similar to that of Fig. 4 may be used for the UE performing the relay. Relay processing in the UE will be described with reference to Fig. 4. Relay processing performed by the UE 805 in communication from the UE 811 to the base station 801 will be described. A radio signal from the UE 811 is received by the antennas 307-1 to 307-4. The received signal is converted from a radio reception frequency into a baseband signal in the frequency converting unit 306, and is subjected to demodulation processing in the demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, and the like used for communication with the UE 811, for example, operation such as removal of a header in each protocol. Protocol processing of the RLC, the MAC, and the like used for communication with the base station 801, for example, operation such as provision of a header in each protocol, is performed. In the protocol processing unit 301 of the UE 811, protocol processing of the PDCP and the SDAP may be performed. The data subjected to the protocol processing is delivered to the encoder unit 304, and is subjected to encoding processing such as error correction. There may be data that is directly output from the protocol processing unit 301 to the modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to the frequency converting unit 306 to be converted into a radio transmission frequency. Subsequently, transmission signals are transmitted from the antennas 307-1 to 307-4 to the base station 801.

Although the above description illustrates an example of the relay performed by the UE 805 in communication from the UE 811 to the base station 801, similar processing is also used in relay in communication from the base station 801 to the UE 811.

A 5G base station can support an integrated access and backhaul (IAB) (see NPLs 2 and 20). A base station supporting the IAB (which may be hereinafter referred to as an IAB base station) includes an IAB donor CU being a CU of the base station that operates as an IAB donor providing an IAB function, an IAB donor DU being a DU of the base station that operates as an IAB donor, and an IAB node connected to the IAB donor DU and the UE using a radio interface. An F1 interface is provided between the IAB node and the IAB donor CU (see NPL 2).

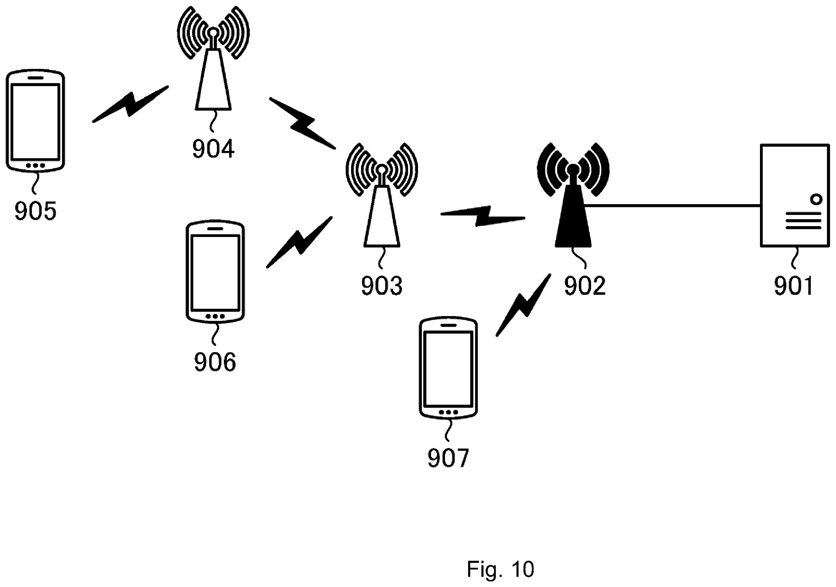

An example of connection of the IAB base stations is illustrated in Fig. 10. An IAB donor CU 901 is connected to an IAB donor DU 902. An IAB node 903 is connected to the IAB donor DU 902, using a radio interface. The IAB node 903 is connected to an IAB node 904, using a radio interface. In other words, multi-stage connection of the IAB nodes may be performed. A UE 905 is connected to the IAB node 904, using a radio interface. A UE 906 may be connected to the IAB node 903 using a radio interface, or a UE 907 may be connected to the IAB donor DU 902 using a radio interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

A Backhaul Adaptation Protocol (BAP) layer is provided in connection between the IAB donor DU and the IAB node and connection between the IAB nodes (see NPL 29). The BAP layer performs operation such as routing of received data to the IAB donor DU and/or the IAB node and mapping of the received data to an RLC channel (see NPL 29).

As an example of a configuration of the IAB donor CU, a configuration similar to that of the CU 215 is used.

As an example of a configuration of the IAB donor DU, a configuration similar to that of the DU 216 is used. In the protocol processing unit of the IAB donor DU, processing of the BAP layer, for example, processing such as provision of a BAP header in downlink data, routing to the IAB node, and removal of the BAP header in uplink data, is performed.

As an example of a configuration of the IAB node, a configuration except the EPC communication unit 401, such another base station communication unit 402, and the 5GC communication unit 412 illustrated in Fig. 5 may be used.

Transmission and reception processing in the IAB node will be described with reference to Fig. 5 and Fig. 10. Transmission and reception processing of the IAB node 903 in communication between the IAB donor CU 901 and the UE 905 will be described. In uplink communication from the UE 905 to the IAB donor CU 901, a radio signal from the IAB node 904 is received by the antenna(s) 408 (a part or all of the antennas 408-1 to 408-4). The received signal is converted from a radio reception frequency into a baseband signal in the frequency converting unit 407, and is subjected to demodulation processing in the demodulating unit 409. The demodulated data is delivered to the decoder unit 410, and is subjected to decoding processing such as error correction. The decoded data is delivered to the protocol processing unit 403, and is subjected to protocol processing of the MAC, the RLC, and the like used for communication with the IAB node 904, for example, operation such as removal of a header in each protocol. Routing to the IAB donor DU 902 using a BAP header is performed, and protocol processing of the RLC, the MAC, and the like used for communication with the IAB donor DU 902, for example, operation such as provision of a header in each protocol, is performed. The data subjected to the protocol processing is delivered to the encoder unit 405, and is subjected to encoding processing such as error correction. There may be data that is directly output from the protocol processing unit 403 to the modulating unit 406 without being subjected to the encoding processing. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted to the IAB donor DU 902 from the antennas 408-1 to 408-4. Similar processing is also performed in downlink communication from the IAB donor CU 901 to the UE 905.

Transmission and reception processing similar to that of the IAB node 903 is also performed in the IAB node 904. In the protocol processing unit 403 of the IAB node 903, as processing of the BAP layer, for example, processing such as provision of a BAP header in uplink communication, routing to the IAB node 904, and removal of the BAP header in downlink communication is performed.

In a mobile communication system in 3GPP, a UE may connect to a plurality of NWs. Connection between the UE and a data network (DN) may be made via an anchor UPF (a UPF that directly connects to the DN). An anchor NW (a network with the anchor UPF, this similarly applies to below) may connect to one or the plurality of NWs connected to the UE.

In connection of the UE to the plurality of NWs, addition of an NW to be connected to the UE may be performed. However, concrete processing for such NW addition has not been disclosed. This causes issues such as connection to the plurality of NWs fails to be established, preventing communication capacity and reliability from being ensured.

The present embodiment discloses a method of solving such issues described above.

In the present embodiment, the anchor NW determines NW addition. For example, an SMF of the anchor NW may perform such determination. The determination by the SMF of the anchor NW enables NW addition determination using a data communication status of the U plane and enables NW addition instruction from the SMF to a UPF to be promptly performed, for example.

The SMF of the anchor NW may request, to the UE, information to be used for NW addition determination. Such request from the SMF of the anchor NW to the UE may be performed via an AMF of the anchor NW. The UE may notify the SMF of the anchor NW about the information. Such notification from the UE may be made via the AMF of the anchor NW. The notification may be made, for example, by using the C plane.

The SMF of the anchor NW may request, to an entity of an addition candidate NW, the information. Such request may be performed, for example, via Security Edge Protection Proxy (SEPP; see NPL 10). The request may be performed via the SEPP of one NW or the SEPPs of both NWs of the anchor NW and the addition candidate NW. The entity of the addition candidate NW may be an SMF or may be a UPF. The entity of the addition candidate NW may notify the SMF of the anchor NW about the information. Such notification may be made, for example, via the SEPP. The notification may be made via the SEPPs of both NWs of the anchor NW and the addition candidate NW. This enables, for example, the SMF of the anchor NW to acquire the information in another NW, resulting in allowing an additional NW to be appropriately selected.

The SMF of the anchor NW may acquire information related to another NW. For example, the SMF may inquire such information related to another NW from an entity of the anchor NW. Examples of the entity in the anchor NW may include NW Exposure Function (NEF) (see NPL 10) and may include NW Repository Function (NRF) (see NPL 10). The entity of the anchor NW may notify the SMF about the information related to such another NW. The information may include information related to an NW, for example, information identifying an NW and may include an address of the NW, for example, information related to an IP address. The address may include, for example, an address of the SEPP of the NW. The SMF may determine an addition candidate NW by using the information related to such another NW.

For the NW addition determination, information related to Quality of Service (QoS) may be used and information related to Quality of Experience (QoE) may be used. The QoS may include information related to communication capacity, may include information related to communication rate, may include information related to latency, and may include information related to data error rate, for example. The QoE may include information related to sound skipping rate, and may include information related to video skipping rate, for example.

As examples of the information used for the NW addition determination, (1) to (9) below are disclosed.
(1) Information related to QoS/QoE supportable by the anchor NW.
(2) Information related to a measurement result of QoS/QoE in the anchor NW.
(3) Information related to QoS/QoE supportable by another NW.
(4) Information related to a measurement result of QoS/QoE in another NW.
(5) Information related to QoS/QoE required for a service.
(6) Information related to a load of the anchor NW.
(7) Information related to a load of another NW.
(8) Information related to an NW connectable for the UE.
(9) Any combination of (1) to (8).

According to (1) described above, for example, selection of an NW with too much QoS can be prevented, resulting in allowing efficiency in a communication system to be enhanced.

According to (2) described above, for example, QoS/QoE to be actually supported in an additional NW can be recognized, resulting in allowing selection of an NW with too much QoS to be prevented and an effect similar to that in the above description to be achieved.

According to (3) described above, for example, the anchor NW can appropriately select an NW to be added. This similarly applies to (4) and (5) described above.

The load of (6) described above may be, for example, a load in a core NW. Examples of such a load may include a load of data traffic amount and a control processing load. Examples of the load may include a load of a UPF, a load of an AMF, and a load of an SMF.

For another example, the load of (6) described above may be, for example, a load in a base station. Examples of such a load may include a load of data traffic amount and a control processing load.

The load of (6) described above may include information related to an apparatus. Examples of the apparatus may include a core NW (for example, AMF, SMF, UPF) and a base station.

According to (6) described above, for example, a situation such as there is no room for load and predetermined QoS is not able to be satisfied can be avoided.

The information of (7) described above may be, for example, information similar to that of (6) described above. This allows, for example, an effect similar to that in (6) described above to be achieved.

The information of (8) described above may be information related to an NW registerable for the UE or may be information related to a cell where the UE is able to exist in and/or an NW where a base station belongs to, for example. According to (8) described above, for example, the anchor NW can be prevented from selecting an NW not connectable for the UE.

The NW addition determination may be performed when the UE is in RRC_Connected state, may be performed when the UE is in RRC_Inactive state, or may be performed when the UE is in RRC_Idle state. This enables, for example, the anchor NW to promptly perform NW addition.

The UE may measure QoS and/or QoE. Such measurement may be performed upon instruction from a core NW apparatus as a trigger, may be performed upon instruction from an application as a trigger, or may be performed by the UE on its own initiative. The core NW apparatus may be, for example, a core NW apparatus of the anchor NW. Examples of the core NW apparatus of the anchor NW may include the SMF of the anchor NW and the AMF of the anchor NW. The SMF may perform the instruction via the AMF.

The UE may report the measurement result. The UE may report the measurement result to a core NW apparatus or may report the measurement result to an application. The core NW apparatus may be, for example, a core NW apparatus of the anchor NW. The core NW apparatus of the anchor NW may be, for example, the AMF of the anchor NW. The AMF may notify the SMF of the anchor NW about the measurement result.

The report from the UE may be performed upon a request from the core NW apparatus as a trigger or may be performed periodically. The core NW apparatus may notify the UE about information related to a periodicity for the report. For such notification, for example, NAS signaling may be used. The notification may include information related to QoS/QoE to be measured and may include information related to an NW to be measured. With use of the information, the UE may perform the measurement and may perform report of the measurement result.

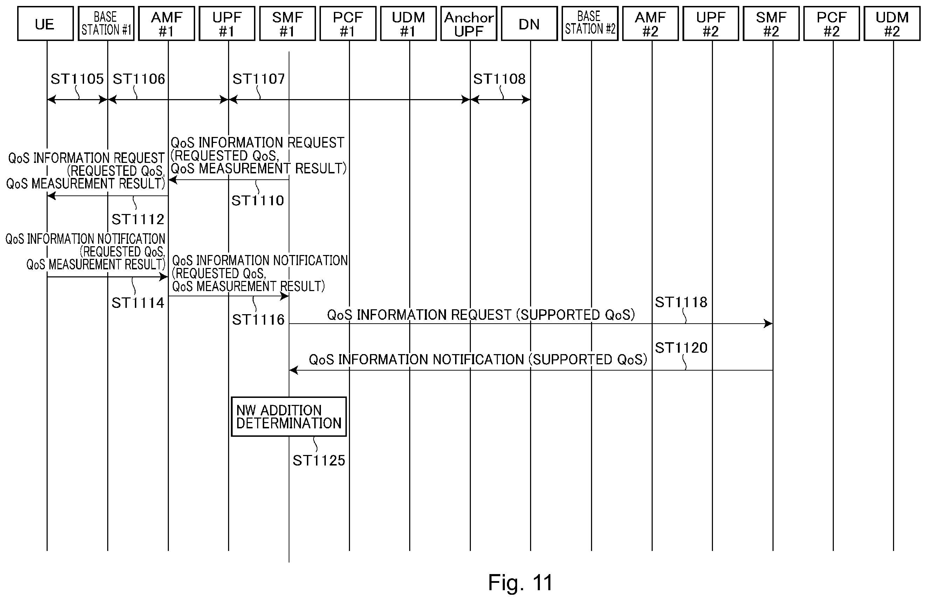

Fig. 11 is a sequence diagram illustrating an example of operation up to determination, by an SMF, of addition of an NW to be connected to a UE. In the example illustrated in Fig. 11, a base station #1, an AMF #1, a UPF #1, an SMF #1, a PCF #1, a UDM #1, and an anchor UPF all belong to an NW #1. A base station #2, an AMF #2, a UPF #2, an SMF #2, a PCF #2, and a UDM #2 all belong to an NW #2. In the example illustrated in Fig. 11, the UE is connected to the NW #1. In the example illustrated in Fig. 11, the SMF #1 determines addition of an NW to be connected to the UE by using information related to QoS.

Steps ST1105 to ST1108 illustrated in Fig. 11 illustrate data transmission and reception between the UE and a data network (DN). The data transmission and reception illustrated with Steps ST1105 to ST1108 are performed via the base station #1, the UPF #1, and the anchor UPF. Step ST1105 illustrates data transmission and reception between the UE and the base station #1. Step ST1106 illustrates data transmission and reception between the base station #1 and the UPF #1. Step ST1107 illustrates data transmission and reception between the UPF #1 and the anchor UPF. Step ST1108 illustrates data transmission and reception between the anchor UPF and the DN.

In Steps ST1110 and ST1112 illustrated in Fig. 11, the SMF #1 requests the information related to QoS from the UE. Such request may be performed via the AMF #1. Step ST1110 illustrates the request from the SMF #1 to the AMF #1 and Step ST1112 illustrates the request from the AMF #1 to the UE. For Step ST1112, NAS signaling may be used. Step ST1110 may include information identifying a UE (for example, an identifier of the UE). With use of the information, the AMF #1 can identify a destination UE for the request. Steps ST1110 and ST1112 may include the information related to QoS requested by the SMF #1. In the example illustrated in FIG. 11, the SMF #1 requests, to the UE, requested QoS for a service of the UE and QoS measurement result. Steps ST1110 and ST1112 may include information related to QoS type. The information related to QoS type may include information related to communication capacity, may include information related to latency, and may include information related to data error rate, for example.

In Steps ST1114 and ST1116 illustrated in Fig. 11, the UE notifies the SMF #1 about the information related to QoS. Such notification may be made via the AMF #1. Step ST1114 illustrates the notification from the UE to the AMF #1 and Step ST1116 illustrates the notification from the AMF #1 to the SMF #1. For Step ST1114, NAS signaling may be used. Step ST1116 may include information identifying a UE (for example, an identifier of the UE). With use of the information, the SMF #1 can identify a source UE for the notification. Steps ST1114 and ST1116 may include the information related to QoS notified by the UE. In the example illustrated in FIG. 11, the UE notifies the SMF #1 about the requested QoS for the service of the UE itself and the QoS measurement result. Steps ST1114 and ST1116 may include information related to QoS type. The information related to QoS type may include information related to communication capacity, may include information related to latency, and may include information related to data error rate, for example. With use of Step ST1116, the SMF #1 acquires the information related to QoS.

In Step ST1118 illustrated in Fig. 11, the SMF #1 requests information related to QoS from the SMF #2. Such request may be performed via the SEPPs of the respective NW #1 and NW #2. Step ST1118 may include information identifying an NW. With use of the information, the SMF #2 can identify that Step ST1118 is request for the NW of the SMF #2. Step ST1118 may include the information related to QoS requested by the SMF #1. In the example illustrated in FIG. 11, the SMF #1 requests, to the SMF #2, information related to QoS supportable for the NW #2. Step ST1118 may include information related to QoS type. The information related to QoS type may include information related to communication capacity, may include information related to latency, and may include information related to data error rate, for example.

In Step ST1120 illustrated in Fig. 11, the SMF #2 notifies the SMF #1 about the information related to QoS. Such notification may be made via the SEPPs of the respective NW #2 and NW #1. Step ST1120 may include information identifying an NW. With use of the information, the SMF #1 can identify that Step ST1120 is notification from the NW #2. Step ST1120 may include the information related to QoS notified by the SMF #2. In the example illustrated in FIG. 11, the SMF #2 notifies the SMF #1 about the information related to QoS supportable for the NW #2. Step ST1120 may include information related to QoS type. The information related to QoS type may include information related to communication capacity, may include information related to latency, and may include information related to data error rate, for example. With use of Step ST1120, the SMF #1 acquires the information related to QoS.

Processing similar to that in Steps ST1118 and ST1120 illustrated in Fig. 11 may be performed to and from a plurality of NWs. This enables, for example, the SMF #1 to acquire the information related to QoS of the plurality of NWs, resulting in allowing a more appropriate destination NW for addition from among the plurality of NWs to be identified.

In Step ST1125 illustrated in Fig. 11, the SMF #1 determines addition of an NW to be connected to the UE. In the example illustrated in Fig. 11, the SMF #1 determines addition of the NW #2.

In Fig. 11, although an example is illustrated that request and notification of the information related to QoS are performed, request and notification of information related QoE may be performed. The request and notification of the information related to QoE may be performed in a manner similar to the request and notification of the information related QoS. For example, the request and notification of the information related to QoE may be performed to and from a UE.

An SMF of an anchor NW may request, to a UPF of the NW, the information described above. The UPF may notify the SMF about the information. This enables, for example, reduction of the amount of signaling between a communication NW and a UE, resulting in allowing communication efficiency to be enhanced.

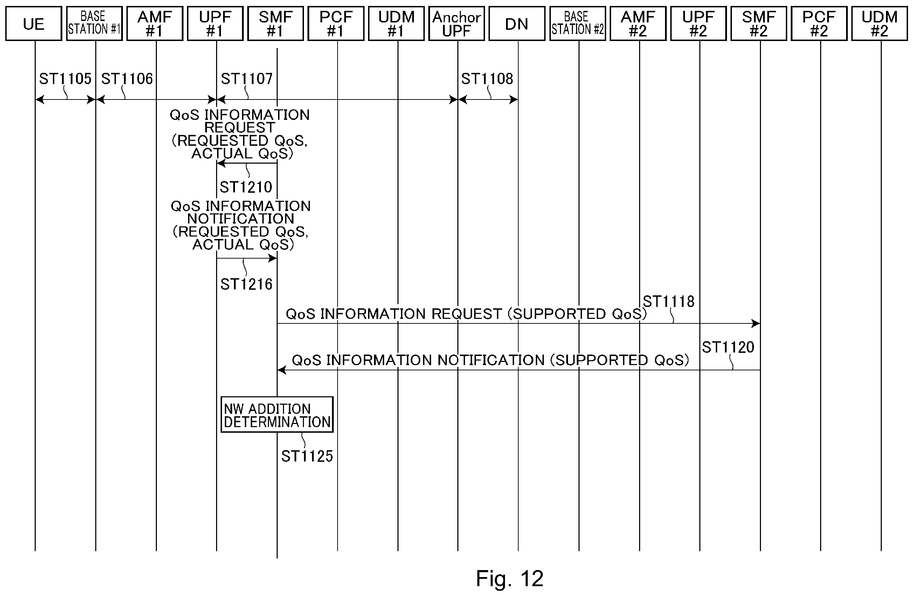

Fig. 12 is a sequence diagram illustrating another example of the operation up to determination, by the SMF, of addition of an NW to be connected to the UE. In the example illustrated in Fig. 12, an example is illustrated that the SMF #1 requests information related to QoS from the UPF #1. In the example illustrated in Fig. 12, processing similar to that of Fig. 11 is denoted with the same step number, and the common description thereof is omitted.

Steps ST1105 to ST1108 illustrated in Fig. 12 are similar to those in Fig. 11.

In Step ST1210 illustrated in Fig. 12, the SMF #1 requests information related to QoS from the UPF #1. Step ST1210 may include information identifying a UE (for example, an identifier of the UE). With use of the information, the UPF #1 can identify a subject UE. Step ST1210 may include the information related to QoS requested by the SMF #1. In the example illustrated in Fig. 12, the SMF #1 requests, to the UPF #1, requested QoS for a service of the UE and QoS measurement result. Step ST1210 may include information related to QoS type. The information related to QoS type may include information related to communication capacity, may include information related to latency, and may include information related to data error rate, for example.

In Step ST1216 illustrated in Fig. 12, the UPF #1 notifies the SMF #1 about the information related to QoS. Step ST1216 may include information identifying a UE (for example, an identifier of the UE). With use of the information, the SMF #1 can identify the subject UE. Step ST1216 may include the information related to QoS notified by the UPF #1. In the example illustrated in Fig. 12, the UPF #1 notifies the SMF #1 about the requested QoS for the service of the UE and the QoS measurement result. Step ST1216 may include information related to QoS type. The information related to QoS type may include information related to communication capacity, may include information related to latency, and may include information related to data error rate, for example. With use of Step ST1216, the SMF #1 acquires the information related to QoS.

Steps ST1118 to ST1125 illustrated in Fig. 12 are similar to those in Fig. 11.

In Fig. 12, although an example is illustrated that request and notification of the information related to QoS are performed, request and notification of information related QoE may be performed.

The report of the measurement result from the UE described above may be performed with satisfaction of a predetermined condition as a trigger. The predetermined condition may be determined in a standard or may be notified from a core NW apparatus of the anchor NW and/or an application to the UE.

As examples of the predetermined condition, (A) to (G) below are disclosed.
(A) A measured QoS/QoE parameter is less than a predetermined threshold or equal to or less than the predetermined threshold.
(B) A measured QoS/QoE parameter is more than a predetermined threshold or equal to or more than the predetermined threshold.
(C) A measured QoS/QoE parameter is less than supportable QoS/QoE or equal to or less than the supportable QoS/QoE.
(D) A measured QoS/QoE parameter is more than supportable QoS/QoE or equal to or more than the supportable QoS/QoE.
(E) A measured QoS/QoE parameter is less than requested QoS/QoE or equal to or less than the requested QoS/QoE.
(F) A measured QoS/QoE parameter is more than requested QoS/QoE or equal to or more than the requested QoS/QoE.
(G) Any combination of (A) to (F).

An offset may be provided in each of (A) to (F) described above. For example, in (A), the condition may be satisfied when the measured QoS/QoE parameter is less than a value obtained by subtracting the offset from the predetermined threshold or equal to or less than the value, or the condition may be satisfied when the measured QoS/QoE parameter is less than a value obtained by adding the offset to the predetermined threshold or equal to or less than the value. This may similarly apply to (B) to (F). This enables, for example, flexible condition determination in a communication system.

The offset value may be notified from an SMF to a UE. Such notification may be made via an AMF. For the notification from the AMF to the UE, for example, NAS signaling may be used.

NW addition may be requested by a UE. For example, the UE may request NW addition from an SMF. Such request may be performed via an AMF. The request may include information related to QoS. For example, the request may include information related to requested QoS for a service of the UE itself and may include information related to QoS measurement result in the UE itself. With the request as a trigger, the SMF may determine NW addition.

A UE capability related to connection to a plurality of NWs may be provided. The UE may notify a base station or the AMF about information related to the capability. The base station may be a base station of an anchor NW or may be a base station of a non-anchor NW. The AMF may be an AMF of the anchor NW or may be an AMF of the non-anchor NW. The base station and/or AMF may notify the SMF about the information related to the capability. Such notification from the base station to the SMF may be made via the AMF. With use of the information, the SMF may determine whether addition of an NW to be connected to the UE is possible.

As examples of the UE capability, (a) to (i) below are disclosed.
(a) Information related to whether connection to a plurality of NWs is possible.
(b) Information related to whether registration to a plurality of NWs is possible.
(c) Information related to the number of RRC states simultaneously had.
(d) Information related to the number of Connection Management (CM) states simultaneously had.
(e) Information related to the number of Registration Management (RM) states simultaneously had.
(f) Information related to the maximum transmission capacity and/or maximum transmission rate of the UE.
(g) Information related to latency of packets in the UE.
(h) Information related to an NW to which the UE can connect.
(i) Any combination of (a) to (h).

According to (a) described above, for example, in a case where the UE is not able to connect to a plurality of NWs, unnecessary determination of NW addition in a core NW apparatus can be prevented, resulting in allowing efficiency regarding control of a communication NW to be enhanced.

According to (b) described above, for example, in a case where the UE is not able to be registered in a plurality of NWs, unnecessary registration processing in a communication system can be prevented, resulting in allowing efficiency regarding control of a communication NW to be enhanced.

The information of (c) described above may be, for example, information related to whether a plurality of RRC states are possible to be had. According to (c) described above, for example, discrepancy in recognition regarding the RRC state of the UE between the UE and a core NW apparatus can be prevented, resulting in allowing malfunction in a communication system to be prevented.

The information of (d) described above may be, for example, information related to whether a plurality of CM states are possible to be had. According to (d) described above, for example, discrepancy in recognition regarding the CM state of the UE between the UE and a core NW apparatus can be prevented, resulting in allowing malfunction in a communication system to be prevented.

The information of (e) described above may be, for example, information related to whether a plurality of RM states are possible to be had. According to (e) described above, for example, discrepancy in recognition regarding the RM state of the UE between the UE and a core NW apparatus can be prevented, resulting in allowing malfunction in a communication system to be prevented.

According to (f) described above, for example, a core NW apparatus can appropriately determine an additional NW required to satisfy QoS of the UE.

According to (g) described above, for example, an effect similar to that in (f) described above can be achieved.

According to (h) described above, for example, a core NW apparatus can be prevented from selecting an NW not connectable for the UE as an additional NW.

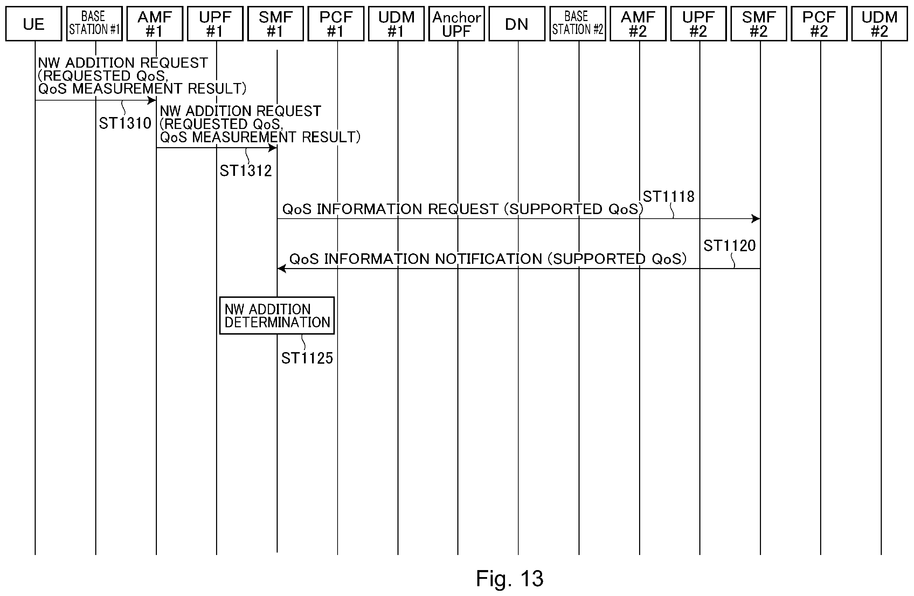

Fig. 13 is a sequence diagram illustrating another example of the operation up to determination, by the SMF, of addition of an NW to be connected to the UE. In the example illustrated in Fig. 13, an example is illustrated that the UE requests, to the SMF #1, addition of an NW to connect. In the example illustrated in Fig. 13, processing similar to that of Fig. 11 is denoted with the same step number, and the common description thereof is omitted.

In Steps ST1310 and ST1312 illustrated in Fig. 13, the UE requests, to the SMF #1, addition of an NW to connect. Such request may be performed via the AMF #1. Step ST1310 illustrates the request from the UE to the AMF #1 and Step ST1312 illustrates the request from the AMF #1 to the SMF #1. For Step ST1310, NAS signaling may be used. Step ST1312 may include information identifying a UE (for example, an identifier of the UE). With use of the information, the SMF #1 can identify a source UE for the notification. Steps ST1310 and ST1312 may include information related to QoS. In the example illustrated in Fig. 13, the UE notifies the SMF #1 about requested QoS for a service of the UE itself and QoS measurement result. Steps ST1310 and ST1312 may include information related to QoS type. The information related to QoS type may include information related to communication capacity, may include information related to latency, and may include information related to data error rate, for example. With use of Step ST1312, the SMF #1 acquires the information related to QoS.

Steps ST1118 to ST1125 illustrated in Fig. 13 are similar to those in Fig. 11.

In Fig. 13, although an example is illustrated that the information related to QoS is included in NW addition request, information related QoE may be included.

For another example regarding the NW addition determination, an AMF may determine NW addition. For example, an AMF of an anchor NW may perform such determination. This enables, for example, complexity in UE state management to be avoided.

The anchor NW may request, to an NW to be added, connection to the UE. Such request may be performed by an SMF of the anchor NW. The request may be performed for an SMF of the NW to be added. With the request as a trigger, the NW to be added may initiate processing of adding an NW to be connected to the UE.

The request may include information related to addition of an NW to be connected by the UE. This enables, for example, the NW to be added to promptly recognize that the request is of addition of an NW to be connected by the UE. The request may include information related to an anchor UPF. This enables, for example, the NW to be added to promptly perform processing of connecting to the anchor NW.

The SMF of the anchor NW may instruct the UE on addition of an NW to connect. The instruction may include information related to an additional NW.

The UE may request registration of the UE itself for the NW to be added. Such request may be performed upon the instruction from the SMF of the anchor NW as a trigger. The instruction may include information indicating addition of an NW to connect and may include information related to the anchor NW.

The UE may request, to the anchor NW, addition of another NW. Such request may include information related to a cause. The information related to the cause may be information indicating that the UE is not able to connect to the NW to be added or may be information indicating that the UE is not able to connect to a base station belonging to the NW to be added, for example. For another example, the UE may notify the anchor NW that the UE is not able to connect to the NW to be added. Such notification from the UE to the anchor NW may be made for the AMF. The AMF may forward the notification to the SMF. With the notification as a trigger, the SMF may re-select an NW to be added. This enables, for example, the UE to connect to the re-selected additional NW.

The NW to be added may perform registration processing of the UE. Such registration processing may be performed upon registration request from the UE as a trigger, for example. The registration processing may be, for example, similar to processing disclosed in clause 4.2.2.2.2 of NPL 31.

The NW to be added may establish a PDU session between the NW and the UE. PDU session establishment processing may be, for example, similar to processing disclosed in clause 4.3.2.2.1 of NPL 31.

The NW to be added may perform, for the anchor NW, response to the request. Such response may be performed by an SMF of the NW to be added. The response may be performed for the SMF of the anchor NW. The response may include information related to the NW to be added, may include information related to the PDU session to be established for the NW to be added, and may include information related to a UPF of the NW to be added.

The SMF of the anchor NW may request, to the anchor UPF, connection to the UPF of the NW to be added. Such request may include information related to the UPF of the NW to be added and may include information related to data to be transferred to the UPF of the NW to be added (for example, information related to QoS flow). The anchor UPF may initiate connection to the UPF of the NW to be added. Such operation of initiating connection may be performed upon the request from the SMF of the anchor NW as a trigger.

A PDU session may be established for the additional NW. At the time of establishment of the PDU session, establishment of connection between the anchor UPF and the UPF of the additional NW may be performed.

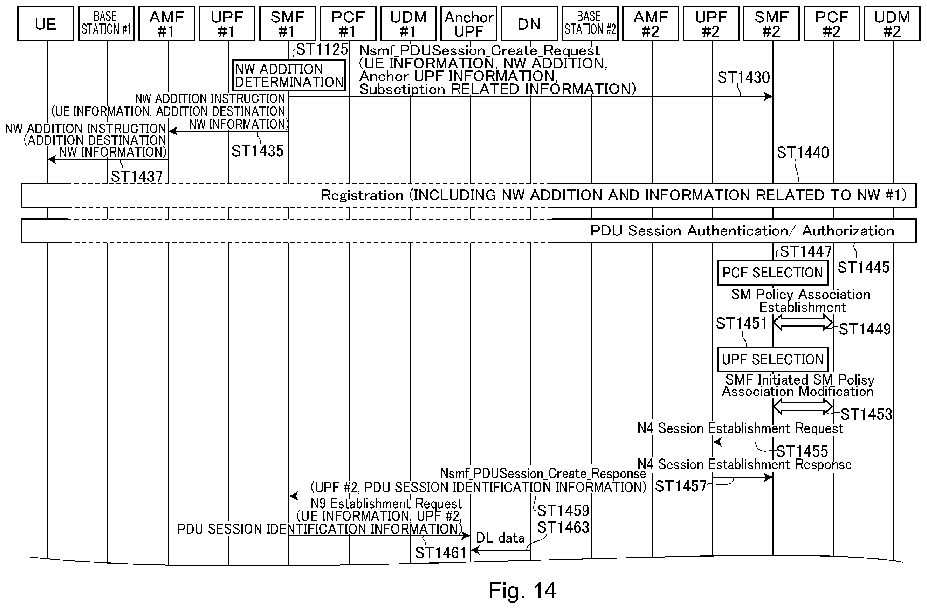

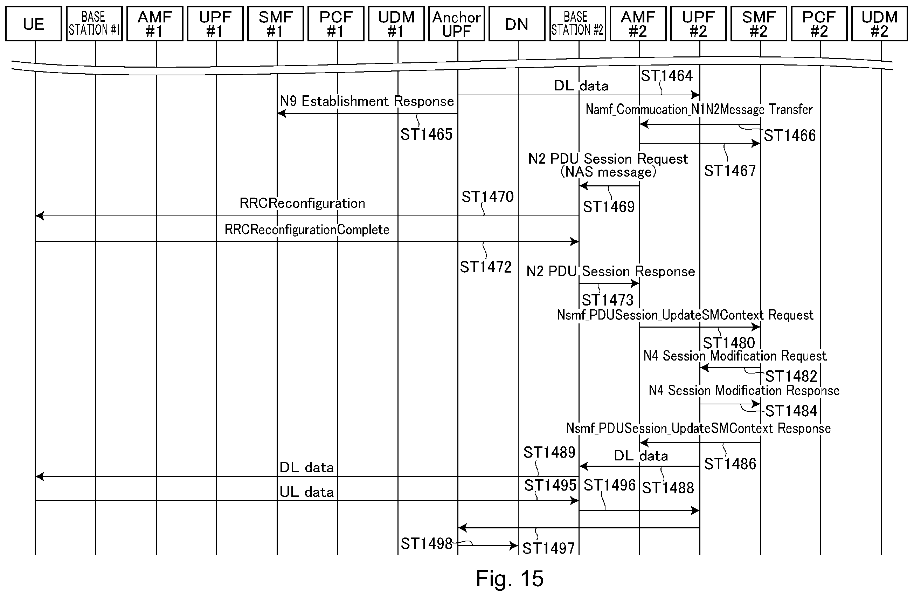

Figs. 14 and 15 are a sequence diagram illustrating an example of registration processing between the UE and the NW to be added and PDU session establishment processing. Fig. 14 illustrates the first half of the sequence and Fig. 15 illustrates the second half of the sequence. In the example illustrated in Figs. 14 and 15, processing similar to that of Fig. 11 is denoted with the same step number, and the common description thereof is omitted.

Step ST1125 illustrated in Fig. 14 is similar to that in Fig. 11.

In Step ST1430 illustrated in Fig. 14, the SMF #1 requests, to the SMF #2, creation of a PDU session. Such request may be request for registration of the UE with respect to the NW #2. The request may include information related to the UE, may include information indicating addition of an NW to be connected by the UE, may include information related to the anchor UPF, may include information related to the anchor NW, and may include information related to subscription of the UE with respect to the NW#1. With Step ST1430 as a trigger, the SMF #2 initiates operation of registering the UE in the NW#2.

In Step ST1435 illustrated in Fig. 14, the SMF #1 instructs the AMF #1 on addition of an NW to be connected by the UE. Such instruction may include information related to the UE and may include information related to an additional NW of the UE. With use of Step ST1435, the AMF #1 recognize the UE related to addition of an NW to connect. In Step ST1437, the AMF #1 instructs the UE on addition of an NW to connect. Such instruction may include information related to an NW to connect. For the instruction, for example, NAS signaling may be used. With the instruction as a trigger, the UE may initiate registration operation with respect to the NW #2. For example, with the instruction as a trigger, the UE may initiate connection to a cell belonging to the NW #2.

In Step ST1440 illustrated in Fig. 14, registration processing is performed between the UE and the NW #2. Such processing may be, for example, similar to processing disclosed in clause 4.2.2.2.2 of NPL 31 (3GPP TS23.502). Signaling of registration request from the UE to the AMF #2 may include information related to NW addition and may include information related to an NW to which the UE itself currently connects. In the example illustrated in Fig. 14, signaling of registration request from the UE to the AMF #2 may include information related to the NW #1.

In Step ST1445 illustrated in Fig. 14, PDU session authentication/authorization is performed between the UE and the NW #2.

In Step ST1447 illustrated in Fig. 14, the SMF #2 selects a PCF. In Step ST1449, a procedure of session management policy association establishment is performed between the SMF #2 and the PCF #2. Such procedure may be, for example, a procedure disclosed in clause 4.16.4 of NPL 31 (3GPP TS23.502).

In Step ST1451 illustrated in Fig. 14, the SMF #2 selects a UPF. In Step ST1453, a procedure of session management policy association modification is performed between the SMF #2 and the PCF #2. Such procedure may be, for example, a procedure disclosed in clause 4.16.5.1 of NPL 31 (3GPP TS23.502).

In Step ST1455 illustrated in Fig. 14, the SMF #2 requests N4 session establishment from the UPF #2. With Step ST1455 as a trigger, the UPF #2 performs N4 session establishment. In Step ST1457, the UPF #2 performs, for the SMF #2, response to Step ST1455.

In Step ST1459 illustrated in Fig. 14, the SMF #2 performs, for the SMF #1, response to Step ST1430. Such response may include information related to a UPF to be used in the NW #2, and may include information related to a PDU session to be used in the NW #2, for example, information used for identification of a PDU session.

In Step ST1461 illustrated in Fig. 14, the SMF #1 requests, to the anchor UPF, establishment of connection to the UPF #2. Such request may include information related to the UE, may include information related to the UPF #2, and may include information related to a PDU session to be used in the NW #2. With the request as a trigger, the anchor UPF establishes connection to the UPF #2. In Step ST1463 illustrated in Fig. 14 and Step ST1464 illustrated in Fig. 15, downlink data from the DN is transferred to the UPF #2. Step ST1463 illustrates the data transfer from the DN to the anchor UPF and Step ST1464 illustrates the data transfer from the anchor UPF to the UPF #2. In Step ST1465, the anchor UPF notifies the SMF #1 about establishment of connection to the UPF #2. Such notification may be made as a response to Step ST1461.

The data transfer in Step ST1464 illustrated in Fig. 15 may be performed upon instruction from the SMF #1 to the anchor UPF as a trigger. Such instruction may be, for example, instruction of data transfer initiation (activation). This enables, for example, flexible control in the data transfer.

The SMF #1 may instruct the anchor UPF on data transfer stop (deactivation). With the instruction as a trigger, the anchor UPF may stop the data transfer. This enables, for example, flexible control in the data transfer.

The SMF #1 may notify the anchor UPF about information related to data processing. Examples of such information may include instruction on transfer activation and/or transfer deactivation and may include information related to a data path. Examples of the information related to the data path may include information indicating passing through both the anchor NW and the NW to be added, information indicating transfer to the NW to be added, information indicating passing through the anchor NW, and information related to data duplication disclosed in Embodiment 5 to be described later below. This enables, for example, flexible control in the data transfer.

In Steps ST1466 and ST1467 illustrated in Fig. 15, information required for N1 interface and N2 interface establishment is transmitted and received between the SMF #2 and the AMF #2. Step ST1466 illustrates message transmission from the SMF #2 to the AMF #2 and Step ST1467 illustrates message transmission from the AMF #2 to the SMF #2.

In Step ST1469 illustrated in Fig. 15, the AMF #2 notifies the base station #2 about PDU session establishment request to the UE. In Step ST1470, the base station #2 notifies the UE about the PDU session establishment request. Step ST1469 may include a message of NAS signaling to the UE. Step ST1470 may include a message of NAS signaling from the AMF #2. For Step ST1469, signaling of the N2 interface may be used. For Step ST1470, RRC signaling, for example, signaling of RRC reconfiguration may be used. With use of Step ST1470, the UE establishes a PDU session.

In Step ST1472 illustrated in Fig. 15, the UE notifies the base station #2 about PDU session establishment completion. In Step ST1473, the base station #2 notifies the AMF #2 about the PDU session establishment completion of the UE. Step ST1472 may include a message of NAS signaling to the AMF #2. Step ST1473 may include a message of NAS signaling from the UE and may include session management information in the base station #2. For Step ST1472, RRC signaling, for example, signaling of RRC reconfiguration completion may be used. For Step ST1473, signaling of the N2 interface may be used.

In Step ST1480 illustrated in Fig. 15, the AMF #2 requests, to the SMF #2, update of PDU session information. In the request, the session management information from the base station #2 may be notified. In Step ST1482, the SMF #2 requests, to the UPF #2, update of the PDU session information. With use of Step ST1482, the UPF #2 updates the PDU session information. In Step ST1484, the UPF #2 notifies the SMF #2 about PDU session information update completion. In Step ST1486, the SMF #2 notifies the AMF #2 about the PDU session information update completion. Step ST1486 may be performed as a response to Step ST1480.

In Steps ST1488 and ST1489 illustrated in Fig. 15, downlink data transmission from the UPF #2 to the UE is performed. Step ST1488 illustrates the downlink data transmission from the UPF #2 to the base station #2 and Step ST1489 illustrates the downlink data transmission from the base station #2 to the UE. The downlink data may include the downlink data in Step ST1464. Steps ST1488 and ST1489 may be performed upon the PDU session information update completion, as a trigger, performed with Step ST1482.

In Steps ST1495 to ST1498 illustrated in Fig. 15, uplink data transmission from the UE to the DN via the NW #2 is performed. Step ST1495 illustrates the uplink data transmission from the UE to the base station #2. Step ST1496 illustrates the uplink data transmission from the base station #2 and the UPF #2. Step ST1497 illustrates the uplink data transmission from the UPF #2 and the anchor UPF. Step ST1498 illustrates the uplink data transmission from the anchor UPF to the DN.

Service request may be performed between the UE and an additional NW. Such service request may be activated by the UE or may be activated by the additional NW. This enables communication to be resumed promptly even in a case where communication between the UE and the additional NW becomes not to be performed once, for example.

Embodiment 1 enables addition of an NW to be connected to the UE, resulting in allowing enhancement in communication capacity and reliability to be achieved.

### Embodiment 2.

The present embodiment discloses a method of releasing an NW added.

A UE requests, to an AMF of an additional NW, deregistration of the additional NW. Such request may include information indicating release of the additional NW only. For the request, for example, NAS signaling may be used.

The AMF of the additional NW may request, to an SMF of the additional NW, deregistration of the UE. Such request may include information indicating release of the additional NW only.

The SMF of the additional NW may request, to a UPF of the additional NW itself, release of a resource. With the request as a trigger, the UPF releases the resource of the UPF itself.

The SMF of the additional NW may notify an SMF of an anchor NW about release of the additional NW. With the notification as a trigger, the SMF of the anchor NW may request, to an anchor UPF, release of connection to the UPF of the additional NW. With the notification as a trigger, the anchor UPF may release connection to the UPF of the additional NW.

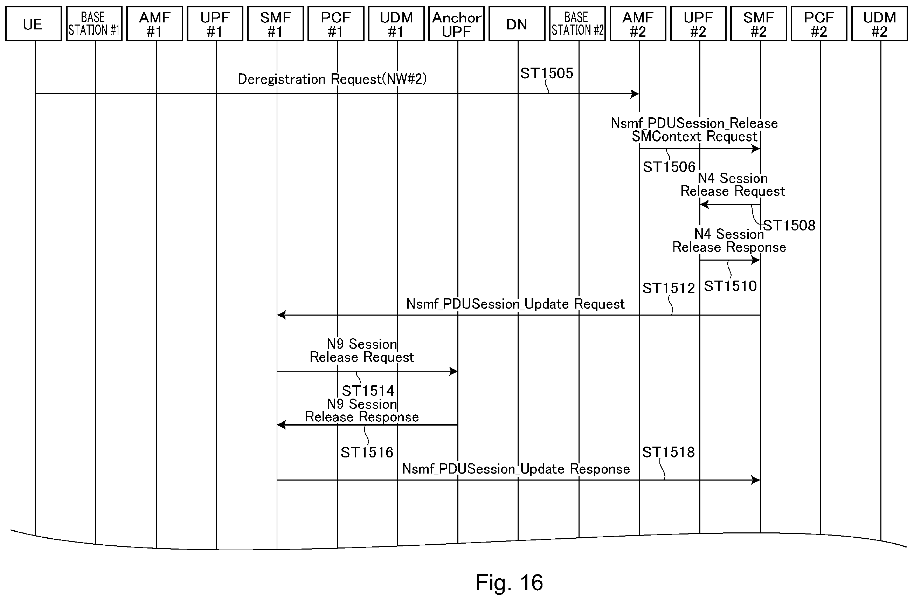

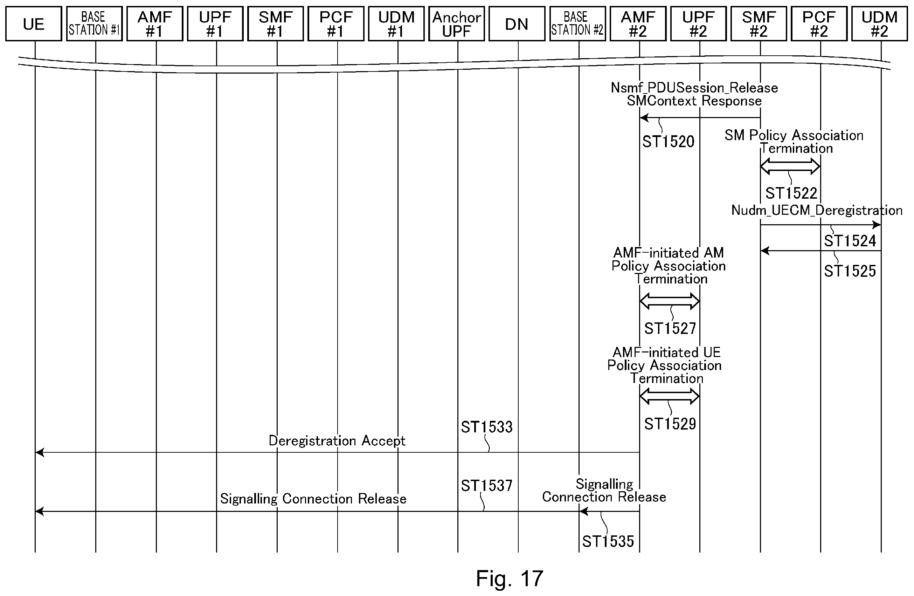

Figs. 16 and 17 are a sequence diagram illustrating an example of operation of releasing the NW connected to the UE. Fig. 16 illustrates the first half of the sequence and Fig. 17 illustrates the second half of the sequence. In the example illustrated in Figs. 16 and 17, deregistration is performed between the UE and the NW #2. In the example illustrated in Figs. 16 and 17, a case is illustrated that the UE requests deregistration from the NW #2.

In Step ST1505 illustrated in Fig. 16, the UE requests, to the AMF #2, deregistration. Such request may include information indicating deregistration of the NW #2 and may include information indicating that registration in the NW #1 continues. In Step ST1506, the AMF #2 requests, to the SMF #2, PDU session release for the UE. Such request may be request of deregistration of the UE from the NW #2. Such request may include information indicating deregistration of the NW #2 and may include information indicating that registration in the NW #1 continues. This enables, for example, the SMF #2 to promptly recognize that it is sufficient to release only a resource of the UPF #2.

In Step ST1508 illustrated in Fig. 16, the SMF #2 requests, to the UPF #2, release of a PDU session. Such request may be request of resource release of the UPF #2 related to the PDU session. With Step ST1508 as a trigger, the UPF #2 may release the PDU session or may release the resource of the UPF #2. In Step ST1510, the UPF #2 performs, for the SMF #2, response to the request.

In Step ST1512 illustrated in Fig. 16, the SMF #2 requests, to the SMF #1, release of connection between the anchor UPF and the UPF #2. Such request may be request of resource release, in the anchor UPF, related to communication with the UPF #2. In Step ST1514, the SMF #1 requests, to the anchor UPF, release of connection to the UPF #2. Such request may be request of resource release related to communication with the UPF #2. With Step ST1514 as a trigger, the anchor UPF may release connection to the UPF #2 or may release a resource, in the anchor UPF itself, related to the communication with the UPF #2. In Step ST1516, the anchor UPF performs, for the SMF #1, response to the request. In Step ST1518, the SMF #1 performs, for the SMF #2, response to Step ST1512.

In Step ST1520 illustrated in Fig. 17, the SMF #2 performs, for the AMF #2, response to the PDU session release request of the UE.

In Step ST1522 illustrated in Fig. 17, a procedure of session management policy association termination is performed between the SMF #2 and the PCF #2. Such procedure may be, for example, a procedure disclosed in clause 4.16.6 of NPL 31. In Steps ST1524 and ST1525, deregistration of the UE is performed between the SMF #2 and the UDM #2. Step ST1524 illustrates signaling transmission from the SMF #2 to the UDM #2 and Step ST1525 illustrates signaling transmission from the UDM #2 to the SMF #2.

In Step ST1527 illustrated in Fig. 17, a procedure of Access and Mobility (AM) policy association termination is performed between the AMF #2 and the UPF #2. The procedure may be, for example, a procedure disclosed in clause 4.16.3.2 of NPL 31. In Step ST1529, a procedure of UE policy association termination is performed between the AMF #2 and the UPF #2. Such procedure may be, for example, a procedure disclosed in clause 4.16.13.2 of NPL 31.

In Step ST1533 illustrated in Fig. 17, the AMF #2 notifies the UE that deregistration is accepted. Such notification may be made, for example, by using NAS signaling. In Steps ST1535 and ST1537, release of signaling connection is performed between the AMF #2, the base station #2, and the UE. Step ST1535 illustrates signaling connection release between the AMF #2 and the base station #2 and Step ST1537 illustrates signaling connection release between the base station #2 and the UE. For Step ST1537, RRC signaling, for example, signaling of RRC release may be used.

A UE may include, in request of deregistration for an anchor NW, information related to an RRC state preferable after the deregistration. An AMF of the anchor NW may notify an SMF of the anchor NW itself about the information. The SMF may notify an SMF of an NW to be deregistered about the information. The SMF of the NW to be deregistered may notify an AMF of the NW itself about the information. The AMF of the NW to be deregistered may notify the UE about the information related to the RRC state after the deregistration. The information related to the RRC state may be included in notification of deregistration acceptance from the AMF to be deregistered to the UE. The UE may configure the RRC state of the UE itself, by using the information related to the RRC state.

For another example, a base station of the NW to be deregistered may notify the UE about an RRC state after the deregistration. The AMF of the NW to be deregistered may notify the base station about the information related to the RRC state. For the notification from the base station to the UE, RRC signaling may be used. Examples of the RRC signaling may include signaling of RRC reconfiguration, signaling of RRC suspension, and signaling of RRC release. The signaling used for the notification from the base station to the UE may be determined according to an RRC state that the UE is to take.

For another example, the UE may request, to the AMF of the anchor NW, deregistration of an additional NW. Such request may include information related to an NW to be deregistered. The AMF may request, to the SMF of the anchor NW, deregistration of the additional NW.

The SMF of the anchor NW may request, to the anchor UPF, release of connection to the UPF of the additional NW. With the request as a trigger, the anchor UPF may release connection to the UPF of the additional NW.

The SMF of the anchor NW instructs the SMF of the additional NW on deregistration of the additional NW. Such instruction may include information related to the UE. With the instruction as a trigger, the SMF of the additional NW may perform deregistration processing of the UE from the additional NW.

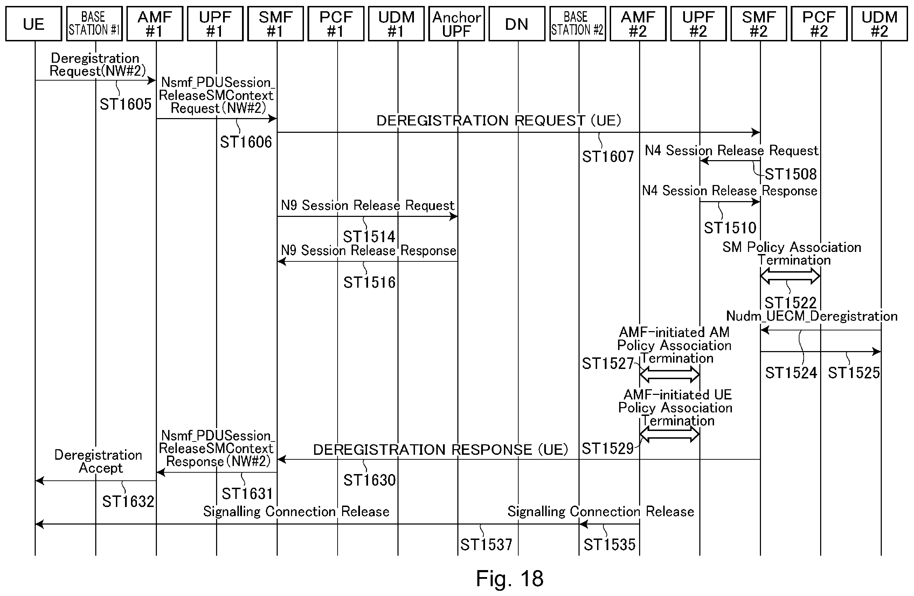

Fig. 18 is a sequence diagram illustrating another example of the operation of releasing the NW connected to the UE. In the example illustrated in Fig. 18, deregistration is performed between the UE and the NW #2. In the example illustrated in Fig. 18, a case is illustrated that the UE requests deregistration from the NW #1 being the anchor NW. In the example illustrated in Fig. 18, processing similar to that of Figs. 16 and 17 is denoted with the same step number, and the common description thereof is omitted.

In Step ST1605 illustrated in Fig. 18, the UE requests, to the AMF #1, deregistration. Such request may include information indicating deregistration of the NW #2 and may include information indicating that registration in the NW #1 continues. In Step ST1606, the AMF #1 requests, to the SMF #1, PDU session release of the UE. Such request may be request of deregistration of the UE from the NW #2. The request may include information indicating deregistration of the NW #2 and may include information indicating that registration in the NW #1 continues. This enables, for example, the SMF #1 to promptly recognize that it is sufficient to release only a resource of the UPF #2. In Step ST1607, the SMF #1 requests, to the SMF #2, deregistration. Such request requests for PDU session release of the UE. The request may include information similar to that in Step ST1606.

Steps ST1508 to ST1529 illustrated in Fig. 18 are similar to those in Figs. 16 and 17. With Step ST1606 as a trigger, the SMF #1 may perform processing of Step ST1514.

In Step ST1630 illustrated in Fig. 18, the SMF #2 performs, for the SMF #1, response to Step ST1607. In Step ST1631, the SMF #1 performs, for the AMF #1, response to Step ST1606. In Step ST1632, the AMF #1 performs, for the UE, response to Step ST1605.

Steps ST1535 and ST1537 illustrated in Fig. 18 are similar to those in Fig. 17.

For another example, an anchor NW may determine deregistration of a UE from an additional NW. For example, an AMF of the anchor NW may perform such determination.

The AMF of the anchor NW may instruct an SMF of the anchor NW on deregistration of the UE from the additional NW. The SMF may request, to the anchor UPF, release of connection to the UPF of the additional NW. With the request as a trigger, the anchor UPF may release connection to the UPF of the additional NW.

The SMF of the anchor NW may instruct the SMF of the additional NW on deregistration of the UE from the additional NW. With use of the instruction, the SMF of the additional NW may perform deregistration processing of the UE from the additional NW.

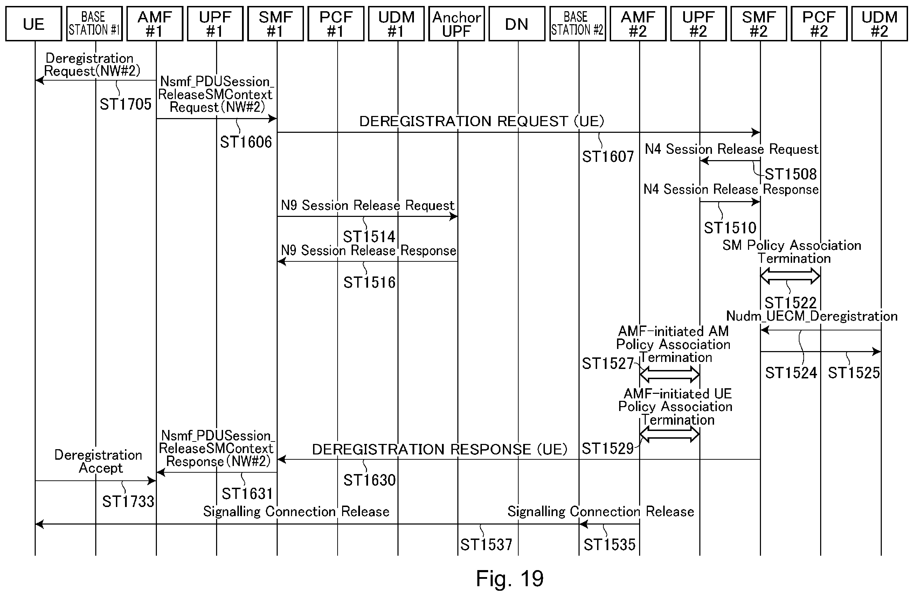

Fig. 19 is a sequence diagram illustrating another example of the operation of releasing the NW connected to the UE. In the example illustrated in Fig. 19, deregistration is performed between the UE and the NW #2. In the example illustrated in Fig. 19, the AMF #1 determines deregistration of the UE from the NW #2. In the example illustrated in Fig. 19, processing similar to that of Figs. 16 to 18 is denoted with the same step number, and the common description thereof is omitted.

In Step ST1705 illustrated in Fig. 19, the AMF #1 requests, to the UE, deregistration. Such request may include information related to an NW to be deregistered and may include information related to an NW to be maintained its registration. In the example illustrated in Fig. 19, information related to the NW #2 as the NW to be deregistered may be included.

Steps ST1606 and ST1607 illustrated in Fig. 19 are similar to those in Fig. 18.

Steps ST1508 to ST1529 illustrated in Fig. 19 are similar to those in Figs. 16 and 17. With Step ST1606 as a trigger, the SMF #1 may perform processing of Step ST1514.

Steps ST1630 and ST1631 illustrated in Fig. 19 are similar to those in Fig. 18.

In Step ST1733 illustrated in Fig. 19, the UE notifies the AMF #1 about acceptance of deregistration. Such notification may be made as a response to Step ST1705. The notification may be made, for example, by using NAS signaling.

Steps ST1535 and ST1537 illustrated in Fig. 19 are similar to those in Fig. 17.

For another example, an additional NW may determine deregistration of a UE. For example, an AMF of the additional NW may perform such determination.

The AMF of the additional NW may request, to the UE, deregistration from the NW #2. The AMF of the additional NW may instruct an SMF of the additional NW on deregistration of the UE from the additional NW. With the instruction as a trigger, the SMF may perform deregistration processing of the UE.

The SMF of the additional NW may notify an SMF of an anchor NW about release of the additional NW. With the notification as a trigger, the SMF of the anchor NW may request, to an anchor UPF, release of connection to a UPF of the additional NW. With the notification as a trigger, the anchor UPF may release connection to the UPF of the additional NW.

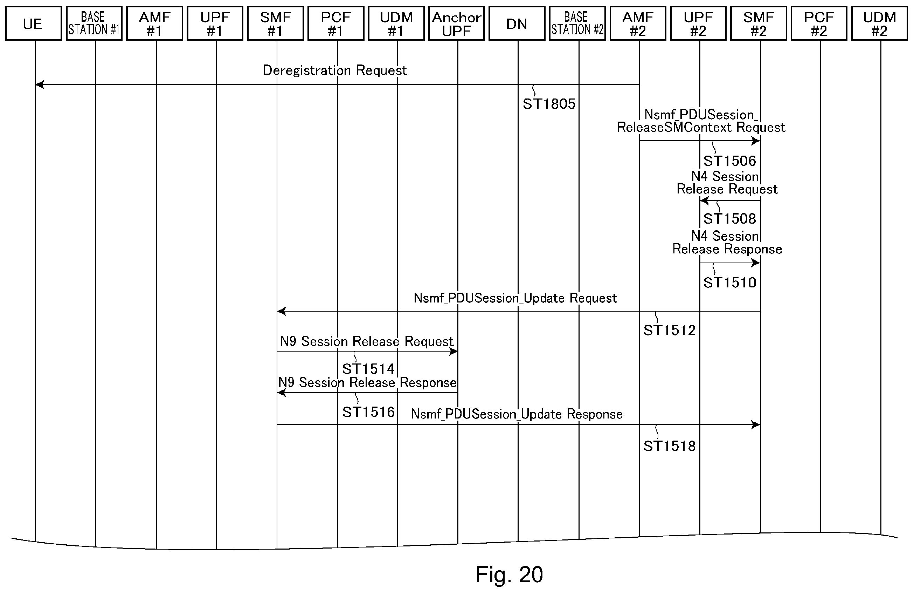

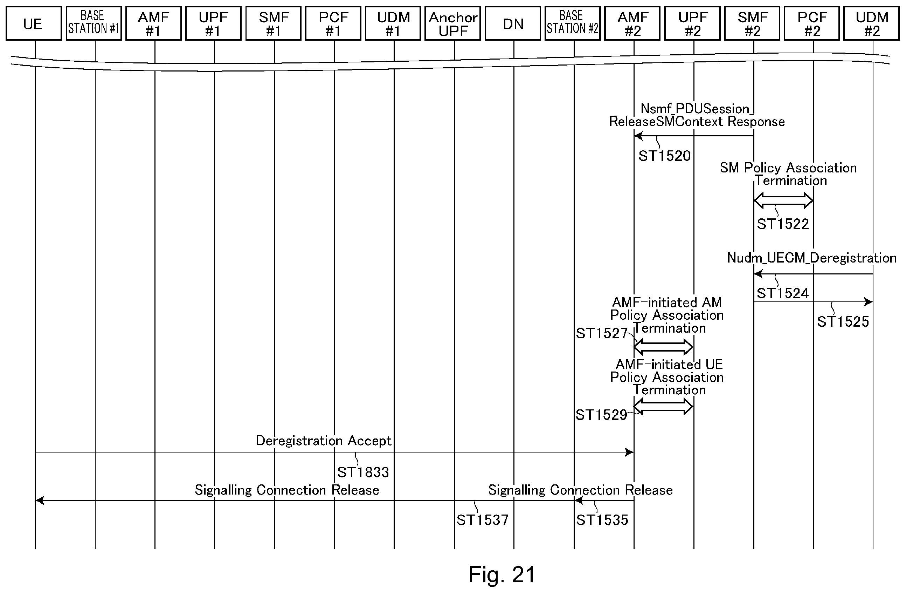

Figs. 20 and 21 are a sequence diagram illustrating another example of the operation of releasing the NW connected to the UE. Fig. 20 illustrates the first half of the sequence and Fig. 21 illustrates the second half of the sequence. In the example illustrated in Figs. 20 and 21, deregistration is performed between the UE and the NW #2. In the example illustrated in Figs. 20 and 21, the AMF #2 requests, to the UE, deregistration. In the example illustrated in Figs. 20 and 21, processing similar to that of Figs. 16 to 18 is denoted with the same step number, and the common description thereof is omitted.

In Step ST1805 illustrated in Fig. 20, the AMF #2 requests, to the UE, deregistration. Such request may include information indicating deregistration of the NW #2 and may include information indicating that registration in the NW #1 continues. The request may be performed, for example, by using NAS signaling.

Steps ST1506 to ST1529 illustrated in Figs. 20 and 21 are similar to those in Figs. 16 and 17.

In Step ST1833 illustrated in Fig. 21, the UE notifies the AMF #2 about acceptance of deregistration. Such notification may be made, for example, by using NAS signaling.

Steps ST1535 and ST1537 illustrated in Fig. 21 are similar to those in Fig. 17.

Release of a PDU session may be performed. For example, only release of the PDU session may be performed. The release of the PDU session may be, for example, release of a PDU session in an additional NW.

A UPF of the additional NW may transfer data to an anchor UPF. The data may be, for example, downlink data. The data may be, for example, data to become untransmitted data for a UE. Such transfer may be performed upon request of resource release of the UPF of the additional NW from an SMF of the additional NW as a trigger, for example. The anchor UPF may transfer the data to a UPF of the anchor NW. The UPF of the anchor NW may transmit the data to the UE via a base station. This enables, for example, lack of data due to deregistration of the additional NW to be prevented.

The UE may transmit data to the anchor NW. The data may be, for example, uplink data. The data may be, for example, data to become untransmitted data for the additional NW. Such transmission from the UE to the anchor NW may be performed upon release of the additional NW, for example signaling of deregistration from the additional NW, as a trigger, or may be performed upon release of signaling connection to the additional NW as a trigger. This enables, for example, lack of data due to deregistration of the additional NW to be prevented.

Connection release between the UE and the additional NW may be performed. Such connection release may be performed before deregistration of the UE. The connection release may be determined by the anchor NW. For example, the SMF of the anchor NW may perform such determination. The SMF of the anchor NW may instruct the SMF of the additional NW on connection release of the additional NW. For another example, the additional NW may perform such determination. For example, the SMF of the additional NW may perform the determination. The SMF of the additional NW may request, to the SMF of the anchor NW, connection release of the additional NW.

Deregistration between the UE and the additional NW may be performed upon the connection release described above as a trigger.

Embodiment 2 enables a connected NW to be released in a case of too much QoS for a communication service, resulting in allowing efficiency in a communication system to be enhanced.

### Alteration 1 of Embodiment 2.

Deregistration for both the anchor NW and the additional NW may be performed.

The UE may request, to the anchor NW, deregistration of both the NWs. Such request may be performed for the AMF of the anchor NW. The AMF of the anchor NW may request, to the SMF of the anchor NW, deregistration of both the NWs. For the request, for example, signaling similar to that in Step ST1606 of Fig. 18 may be used. With the request as a trigger, the SMF of the anchor NW may perform deregistration of the UE from the anchor NW. For the deregistration, for example, a method disclosed in clause 4.2.2.3.2 of NPL 31 may be used.

The SMF of the anchor NW may request, to an SMF of a non-anchor NW, deregistration of the UE. For such request, for example, signaling similar to that in Step ST1607 of Fig. 18 may be used.

The SMF of the non-anchor NW may perform deregistration of the UE from the non-anchor NW. For the deregistration, for example, a method disclosed in clause 4.2.2.3.2 of NPL 31 may be used.

The SMF of the anchor NW may instruct the anchor UPF on release of a resource related to communication with the UE. Such instruction may include information related to the anchor NW, may include information related to the non-anchor NW, or may include information related to both the NWs. The anchor UPF may release, using the information, the resource related to communication with the UE.

The SMF of the non-anchor NW may notify the SMF of the anchor NW about response to the deregistration request. For such notification, for example, processing similar to that in Step ST1630 of Fig. 18 may be performed. The SMF of the anchor NW may notify the AMF of the anchor NW about response to the deregistration request. For such notification, for example, signaling similar to that in Step ST1631 of Fig. 18 may be used.

Another solution will be disclosed. The anchor NW may determine deregistration of the UE from both the NWs. For operation of deregistration of both the NWs determined by the anchor NW, for example, a combination of processing disclosed in clause 4.2.2.3.3 of NPL 31 and processing disclosed in Embodiment 2 (for example, processing illustrated in Fig. 19) may be used.

Alteration 1 enables processing of release of the UE from an NW to be promptly performed.

### Embodiment 3.

Switching of additional NWs may be performed.

Such switching may be performed with, for example, a combination of deletion of an additional NW disclosed in Embodiment 2 and addition of an NW disclosed in Embodiment 1.

The switching may be determined by the anchor NW. For example, the anchor NW may request, to the UE, switching of NWs. Such request may include information related to an NW to be deregistered and may include information related to an NW to be newly registered. Such operation of switching may be performed with, for example, a combination of deletion of an additional NW disclosed in Embodiment 2 and addition of an NW disclosed in Embodiment 1.

The AMF of the anchor NW may request, to the SMF of the anchor NW, the switching. Such request may include information related to an NW to be deregistered, may include information related to an NW to be newly registered, and may include information related to the UE. The SMF of the anchor NW may request, to the NW to be deregistered, deregistration. With such request as a trigger, the NW to be deregistered may perform deregistration of the UE from the NW itself. Operation of the deregistration may be similar to a method disclosed in Embodiment 2, for example. The SMF of the anchor NW may request, to an NW to be added, registration of the UE. With such request as a trigger, the NW to be added may perform registration of the UE in the NW itself. Operation of the registration may be similar to a method disclosed in Embodiment 1, for example.

For another example, the UE may request such switching. The UE may perform such request for the anchor NW. For example, the UE may perform, for the AMF of the anchor NW, the request. For example, the UE may request, to the anchor NW, switching of NWs. Such request may include information related to an NW to be deregistered and may include information related to an NW to be newly registered. Operation of the switching may be similar to that described above, for example.

Data transfer may be performed. The data may be, for example, data to become untransmitted data for the UE. For example, data transfer from the UPF of the NW to be deregistered to the anchor UPF may be performed and data transfer from the anchor UPF to the UPF of the NW to be added may be performed. The data transfer from the UPF of the NW to be deregistered to the anchor UPF may be performed similarly to Embodiment 2, for example. The data transfer from the anchor UPF to the UPF of the NW to be added may be performed upon establishment of connection of the anchor UPF to the UPF of the NW to be added as a trigger, for example.

For another example regarding such data transfer, the data may be data to become untransmitted data from the UE to a deregistered NW. For example, data transfer from the UE to the anchor NW may be performed and data transfer from the UE to the NW to be added may be performed. Such data transfer may be performed similarly to Embodiment 2, for example.

Embodiment 3 enables, for example even in a case where QoS becomes not to be ensured in an added NW, switching from the NW to another NW, resulting in allowing QoS in a communication system to be ensured.

### Embodiment 4.

There may be a plurality of anchor UPFs. For example, two or more NWs out of NWs that the UE connects to may each include an anchor UPF.

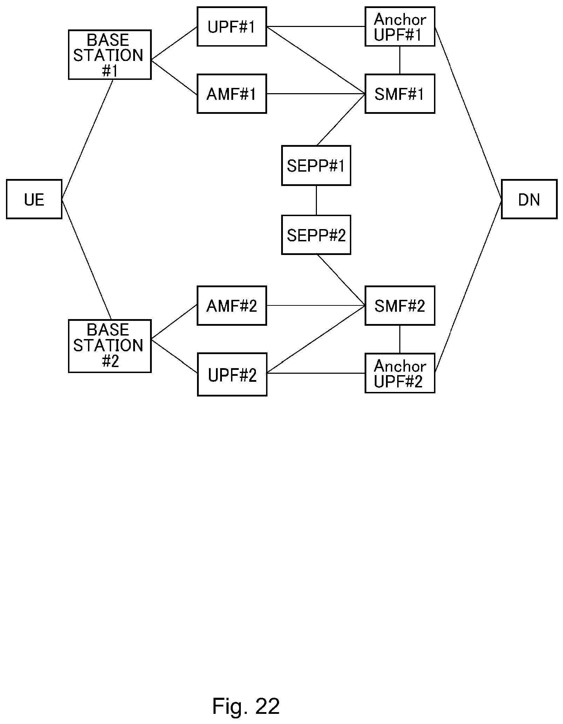

Fig. 22 is a diagram illustrating an example of a network configuration with a plurality of anchor UPFs. In the example illustrated in Fig. 22, the NW #1 and NW #2 each include an anchor UPF.

Switching of the anchor UPFs of the NWs in communication from a DN to the UE may be performed in the DN. For example, in Fig. 22, with unreach of data to the UE via the anchor UPF #1 as a trigger, the DN may switch to a path via the anchor UPF #2.

For another example, one or more NWs out of NWs that the UE connects to may each include a plurality of anchor UPFs.

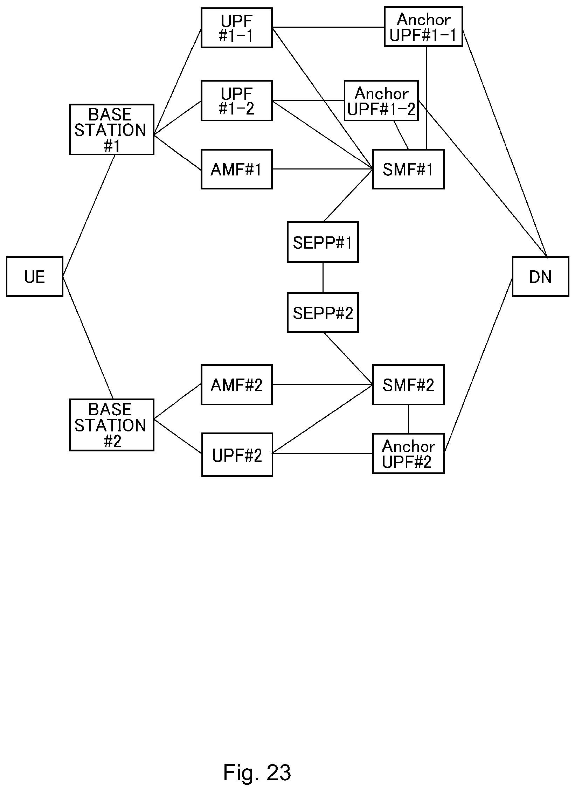

Fig. 23 is a diagram illustrating another example of the network configuration with a plurality of anchor UPFs. In the example illustrated in Fig. 23, the NW #1 includes two anchor UPFs (Anchor UPFs #1-1 and #1-2) and the NW #2 includes one anchor UPF (Anchor UPF #2).

Addition of an anchor UPF may be determined by an SMF. The SMF may be an SMF of the anchor NW or may be an SMF of a non-anchor NW. For example, an SMF of an NW where a UPF to be added belongs to may perform such determination. The SMF may instruct the anchor UPF to be added about configuration of a resource for the anchor UPF. With such instruction as a trigger, the UPF may perform configuration as the anchor UPF.

Deletion of an anchor UPF may be determined by an SMF. The SMF may be an SMF of the anchor NW or may be an SMF of a non-anchor NW. For example, an SMF of an NW where a UPF to be added belongs to may perform such determination. The SMF may instruct the anchor UPF to be added about release of a resource for the anchor UPF. With such instruction as a trigger, the UPF may release the resource as the anchor UPF.

Switching of anchor UPFs may be determined by an SMF. Such switching may be performed, for example, as a combination of addition and deletion of anchor UPFs described above.

Change of a resource for the anchor UPF may be performed. Such change of a resource may be addition of an anchoring function of predetermined data to an existing anchor UPF, may be deletion of an anchoring function of predetermined data from the existing anchor UPF, or may be change of a path of predetermined data (for example, a UPF passed through by the data) regarding the existing anchor UPF. The change of the resource may be determined by an SMF. The SMF may be an SMF of the anchor NW or may be an SMF of a non-anchor NW. For example, an SMF of an NW where a UPF to be added belongs to may perform such determination. The SMF may instruct the anchor UPF about change of a resource. With such instruction as a trigger, the UPF may perform the change of the resource.

Connection between the anchor UPF and a UPF of another NW may be performed. In the example illustrated in Fig. 22, the anchor UPF #1 and the UPF #2 may connect to each other. The anchor UPF #2 and the UPF #1 may connect to each other. For another example, in Fig. 23, each of the anchor UPF #1-1 and anchor UPF #1-2 may connect to the UPF #2. The anchor UPF #2 may connect to each of the UPF #1-1 and UPF #1-2. With this, for example, even in a case where the anchor UPF of one NW and the UPF of the other NW are both out of order, the DN can communicate with the UE via the anchor UPF of the other NW and the UPF of the one NW, resulting in allowing reliability in communication to be enhanced.

Embodiment 4 enables communication between the UE and the DN even in a case where a failure of one anchor UPF occurs, resulting in allowing reliability in a communication system to be enhanced.

### Embodiment 5.

In communication using a plurality of NWs, data duplication may be performed. For example, duplicated data segments may be transmitted and received via the respective NWs different from each other.

A transmitter apparatus may duplicate data. The transmitter apparatus may add, to data to be duplicated, information identifying duplication. Examples of such information may include a sequence number and a time stamp. The transmitter apparatus may transmit, to the NWs, the respective duplicated data segments.

A receiver apparatus may detect duplication of data and may delete duplicatedly received data. For example, the receiver apparatus may use only data received the earliest, and delete duplicate data received thereafter. The receiver apparatus may use the information described above for detection of duplicate data.

The transmitter apparatus may be a UPF, for example. The UPF may be an anchor UPF, for example. For another example, a new entity may be provided and such a new entity may duplicate data. For example, the anchor UPF may transmit, to the respective UPFs of the NWs, the respective duplicated data segments.

For another example, the transmitter apparatus may be a UE. The UE may perform duplication of data in a PDU layer or may be provided with a new layer and perform such duplication of data in the new layer, for example. The PDU layer may be a PDU layer opposed to the anchor UPF, for example.

The receiver apparatus may be a UE, for example. The UE may perform detection and/or deletion of duplicated data in a PDU layer or may be provided with a new layer and perform such detection and/or deletion of duplicated data in the new layer, for example.

For another example, the receiver apparatus may be a UPF, for example. The UPF may be an anchor UPF, for example. For another example, a new entity may be provided and such a new entity may perform detection and/or deletion of duplicated data.

Data duplication may be configured by an AMF. The AMF may be an AMF of an anchor NW, for example. The AMF may instruct the UE about configuration of data duplication. Such instruction may include information related to data for duplication, for example, information related to a QoS flow. The instruction from the AMF to the UE may be performed, for example, by using NAS signaling. With the instruction as a trigger, the UE may configure the data duplication or may initiate the data duplication.

The AMF may instruct an SMF of the NW to which the AMF belongs about configuration of the data duplication. Such instruction may include information related to data for duplication, for example, information related to a QoS flow. The SMF may configure, for the UPF, the data duplication. The UPF may be an anchor UPF, for example. For another example, the SMF may configure, for the new entity to perform the data duplication, the data duplication. Such configuration from the SMF for the UPF and/or the entity may include information related to data for duplication, for example, information related to a QoS flow. With the configuration as a trigger, the UPF and/or the entity may initiate the data duplication.

Release of data duplication configuration may be determined by an AMF. Operation of such release may be performed in a manner similar to that of operation of configuration of data duplication, for example.

Activation/deactivation of data duplication may be performed. Such activation/deactivation may be determined by an AMF. The AMF may be an AMF of an anchor NW, for example. Operation of such activation/deactivation may be performed in a manner similar to that of operation of configuration of data duplication, for example.

For another example, the AMF that determines activation/deactivation of data duplication may be an AMF of a non-anchor NW. The AMF may notify an SMF of the NW to which the AMF belongs about information related to activation/deactivation of data duplication. The SMF may notify an SMF of the anchor NW about the information related to activation/deactivation of data duplication. The SMF of the anchor NW may instruct the anchor UPF about the activation/deactivation of data duplication.

The SMF of the anchor NW may notify the AMF of the anchor NW about the information related to activation/deactivation of data duplication. This enables, for example, the AMF of the anchor NW to recognize activation/deactivation of data duplication determined by the AMF of the non-anchor NW, resulting in allowing discrepancy regarding the data duplication between the AMF of the anchor NW and the AMF of the non-anchor NW to be prevented and resulting in allowing malfunction in a communication system to be prevented.

Embodiment 5 enables reliability in communication between the UE and the UPF to be enhanced.

In the present disclosure, signaling between different NWs may be performed via the SEPP (see NPL 10). This enables, for example, security in the signaling to be ensured.

In the present disclosure, for user data transfer between different NWs, Inter PLMN User Plane Security (IPUPS) function (see NPL 10) may be used. This enables, for example, security in the user data transfer to be ensured.

Transmission and reception between a base station and a CN node (except AMF) may be performed via an AMF. As another method, transmission and reception between the base station and the CN node (except AMF) may be performed via no AMF. No AMF is passed through and thus the signaling amount can be reduced, allowing a load of the AMF to be reduced.

In this specification, a node may be a function.

In the communication system according to the present disclosure, one or a plurality of cells may be configured in one gNB. In the present disclosure, although there is a description of the gNB or the cell, it may be the gNB or may be the cell, unless otherwise specifically noted.

In the present disclosure, the gNB may be the MCG or the SCG.

The embodiments and their alterations described above are merely illustrative, and the embodiments and their alterations can be freely combined. Any component in the embodiments and their alterations can be modified or omitted as appropriate.

For example, in the embodiments and their alterations described above, a slot is an example of a time unit of communication in the fifth generation communication system. The slot may be a scheduling unit. In the embodiments and their alterations described above, processing described to be performed in a slot unit may be performed in a TTI unit, a subframe unit, a sub-slot unit, or a mini-slot unit.

For example, the methods disclosed in the embodiments and their alterations described above may be applied to the IAB. They may be applied to communication between the IAB donor and the IAB node. They may be applied to processing using Uu in the IAB.

### Reference Signs List

Various aspects of the present disclosure are summarized below as supplementary notes.

### (Supplementary Note 1)

A communication system supporting a fifth generation radio access system, the communication system including:
a plurality of networks each including a radio access network and a core network, wherein
an anchor network, of the plurality of networks, that a communication terminal is connected to and that has a user plane function of directly connecting to a data network being a data transmission and reception destination for the communication terminal is configured to perform, based on information related to communication quality between the communication terminal and the data network, determination of whether addition of a network for the communication terminal to connect to is required and selection of an additional network in a case where the addition of a network for the communication terminal to connect to is required, and
the network selected as the additional network by the anchor network is configured to perform registration processing for connection to the communication terminal.

### (Supplementary Note 2)

The communication system according to Supplementary Note 1, wherein
in a case where the communication terminal connected to the plurality of networks determines deregistration of a network, out of the plurality of networks connected, not corresponding to the anchor network, the network to be deregistered is configured to receive, from the communication terminal, a deregistration request with respect to the network itself and perform processing of releasing connection to the anchor network and processing of deregistration of the communication terminal.

### (Supplementary Note 3)

The communication system according to Supplementary Note 1, wherein
in a case where the communication terminal connected to the plurality of networks determines deregistration with respect to a network, out of the plurality of networks connected, not corresponding to the anchor network,
the anchor network is configured to receive, from the communication terminal, a deregistration request for the network and perform processing of releasing connection to the network to be deregistered and
the network to be deregistered is configured to perform, in response to a request from the anchor network, processing of deregistration of the communication terminal.

### (Supplementary Note 4)

The communication system according to Supplementary Note 1, wherein
the anchor network is configured to determine deregistration of the communication terminal with respect to the network other than the anchor network, request, to the communication terminal, deregistration with respect to the network to be deregistered, and perform processing of releasing connection to the network to be deregistered, and
the network to be deregistered is configured to perform, in response to a request from the anchor network, processing of deregistration of the communication terminal.

### (Supplementary Note 5)

The communication system according to Supplementary Note 1, wherein
the network, out of the networks that the communication terminal is connected to, not corresponding to the anchor network is configured to determine deregistration of the communication terminal with respect to the network itself, request, to the communication terminal, deregistration with respect to the network itself, and perform processing of releasing connection to the anchor network and processing of deregistration of the communication terminal.

### (Supplementary Note 6)

The communication system according to Supplementary Note 3, wherein
the anchor network is configured to further perform, in a case where the anchor network further receives a deregistration request with respect to the anchor network from the communication terminal, processing of releasing connection to the communication terminal.

### (Supplementary Note 7)

The communication system according to any one of Supplementary Notes 2 to 5, wherein
after the network to be deregistered has performed the processing of deregistration of the communication terminal, a network, of the plurality of networks, different from a network, of the plurality of networks, to be registered is configured to perform registration processing for connection to the communication terminal.

### (Supplementary Note 8)

The communication system according to any one of Supplementary Notes 1 to 7, wherein
the network selected as the additional network by the anchor network has the user plane function of directly connecting to the data network being the data transmission and reception destination for the communication terminal.

### (Supplementary Note 9)

The communication system according to any one of Supplementary Notes 1 to 8, wherein
the user plane function of directly connecting to the data network that the anchor network has is configured to duplicate data from the data network, and
the anchor network and the network connected to the communication terminal is each configured to transmit identical data obtained by duplication processing with the user plane function.

### Reference Signs List

- 202: Communication terminal apparatus (mobile terminal),
- 210: Communication system,
- 213, 240-1, 240-2, 750: Base station apparatus (NR base station, base station),
- 214: 5G core unit,
- 215: Central unit,
- 216: Distributed unit,
- 217: Control-plane central unit,
- 218: User-plane central unit,
- 219: TRP,
- 301, 403: Protocol processing unit,
- 302: Application unit,
- 304, 405: Encoder unit,
- 305, 406: Modulating unit,
- 306, 407: Frequency converting unit,
- 307-1 to 307-4, 408-1 to 408-4: Antenna,
- 308, 409: Demodulating unit,
- 309, 410: Decoder unit,
- 310, 411, 526: Control unit,
- 401: EPC communication unit,
- 402: Other base station communication unit,
- 412: 5GC communication unit,
- 521: Data network communication unit,
- 522: Base station communication unit,
- 523: User plane communication unit,
- 523-1: PDU processing unit,
- 523-2: Mobility anchoring unit,
- 525: Control plane control unit,
- 525-1: NAS security unit,
- 525-2: Idle state mobility management unit,
- 527: Session management unit,
- 527-1: PDU session control unit,
- 527-2: UE IP address assigning unit,
- 751-1 to 751-8: Beam,
- 752: Cell,
- 1100: Learning apparatus,
- 1110, 1210: Data acquisition unit,
- 1120: Model generation unit,
- 1121: Reward calculation unit,
- 1122: Function update unit,
- 1130: Learned model storage unit,
- 1200: Inference apparatus,
- 1220: Inference unit.

## Claims

1. A communication system supporting a fifth generation radio access system, the communication system comprising:
a plurality of networks each including a radio access network and a core network, wherein
an anchor network, of the plurality of networks, that a communication terminal is connected to and that has a user plane function of directly connecting to a data network being a data transmission and reception destination for the communication terminal is configured to perform, based on information related to communication quality between the communication terminal and the data network, determination of whether addition of a network for the communication terminal to connect to is required and selection of an additional network in a case where the addition of a network for the communication terminal to connect to is required, and
the network selected as the additional network by the anchor network is configured to perform registration processing for connection to the communication terminal.

2. The communication system according to claim 1, wherein
in a case where the communication terminal connected to the plurality of networks determines deregistration of a network, out of the plurality of networks connected, not corresponding to the anchor network, the network to be deregistered is configured to receive, from the communication terminal, a deregistration request with respect to the network itself and perform processing of releasing connection to the anchor network and processing of deregistration of the communication terminal.

3. The communication system according to claim 1, wherein
in a case where the communication terminal connected to the plurality of networks determines deregistration with respect to a network, out of the plurality of networks connected, not corresponding to the anchor network,
the anchor network is configured to receive, from the communication terminal, a deregistration request for the network and perform processing of releasing connection to the network to be deregistered and
the network to be deregistered is configured to perform, in response to a request from the anchor network, processing of deregistration of the communication terminal.

4. The communication system according to claim 1, wherein
the anchor network is configured to determine deregistration of the communication terminal with respect to the network other than the anchor network, request, to the communication terminal, deregistration with respect to the network to be deregistered, and perform processing of releasing connection to the network to be deregistered, and
the network to be deregistered is configured to perform, in response to a request from the anchor network, processing of deregistration of the communication terminal.

5. The communication system according to claim 1, wherein
the network, out of the networks that the communication terminal is connected to, not corresponding to the anchor network is configured to determine deregistration of the communication terminal with respect to the network itself, request, to the communication terminal, deregistration with respect to the network itself, and perform processing of releasing connection to the anchor network and processing of deregistration of the communication terminal.

6. The communication system according to claim 3, wherein
the anchor network is configured to further perform, in a case where the anchor network further receives a deregistration request with respect to the anchor network from the communication terminal, processing of releasing connection to the communication terminal.

7. The communication system according to any one of claims 2 to 5, wherein
after the network to be deregistered has performed the processing of deregistration of the communication terminal, a network, of the plurality of networks, different from a network, of the plurality of networks, to be registered is configured to perform registration processing for connection to the communication terminal.

8. The communication system according to claim 1, wherein
the network selected as the additional network by the anchor network has the user plane function of directly connecting to the data network being the data transmission and reception destination for the communication terminal.

9. The communication system according to claim 1, wherein
the user plane function of directly connecting to the data network that the anchor network has is configured to duplicate data from the data network, and
the anchor network and the network connected to the communication terminal is each configured to transmit identical data obtained by duplication processing with the user plane function.
